# EUROPÄISCHE PATENTSCHRIFT

(11) **EP 3 684 720 B1**
(45) Veröffentlichungstag und Bekanntmachung des Hinweises auf die Patenterteilung: **31.08.2022**
(21) Anmeldenummer: 18737249.5
(22) Anmeldetag: 03.07.2018
(51) Int. Cl.: B66B 19/00, B66B 1/34, B66B 1/46

(54) **BEFÖRDERUNGSEINRICHTUNG ZUR BEFÖRDERUNG VON PERSONEN UND/ODER GEGENSTÄNDEN**
CONVEYING DEVICE FOR CONVEYING PEOPLE AND/OR OBJECTS
DISPOSITIF DE TRANSPORT DESTINÉ À TRANSPORTER DES PERSONNES ET/OU DES OBJETS

(30) Priorität: 18.09.2017 DE 102017121594
(43) Veröffentlichungstag der Anmeldung: 29.07.2020
(73) Patentinhaber: Telegärtner Elektronik GmbH, 74564 Crailsheim (DE)
(72) Erfinder: KRUSKA, Dirk, 74572 Blaufelden (DE); HOPF, Thomas, 86739 Ederheim (DE)
(74) Vertreter: Hafner & Kohl PartmbB
(86) Internationale Anmeldenummer: PCT/EP2018/067994
(87) Internationale Veröffentlichungsnummer: WO 2019/052706

(56) Entgegenhaltungen:
- WO-A1-2008/145803
- US-A1- 2005 155 821
- US-A1- 2007 080 026
- US-B1- 6 615 175

## Beschreibung

Die Erfindung betrifft eine Beförderungseinrichtung zur Beförderung von Personen und/oder Gegenständen entlang eines zwischen einem Fahrweganfangspunkt und einem Fahrwegendpunkt definierten Fahrwegs.

Entsprechende Beförderungseinrichtungen zur Beförderung von Personen und/oder Gegenständen sind aus der Technik in einer Vielzahl an unterschiedlichen Ausgestaltungen bekannt. Beispielhaft sei auf Personenbeförderungseinrichtungen, wie z. B. Personenaufzüge, oder Lastbeförderungseinrichtungen, wie z. B. Lastenaufzüge, verwiesen. Wie sich weiter unten ergibt, können auch Fahrsteige oder Rolltreppen als Beförderungseinrichtungen verstanden werden.

Jeweilige Beförderungseinrichtungen weisen eine oder mehrere in Betrieb nehmbare bzw. im Betrieb der Beförderungseinrichtung in Betrieb genommene Funktionskomponenten auf. Jeweilige Funktionskomponenten weisen typischerweise wenigstens einen Betriebsmodus auf, in welchem diese in Betrieb genommen sind, d. h. eine diesen bestimmungsgemäß eigene Funktion auf Grundlage eines bestimmten Betriebsparametersatzes ausführen.

Eine solche Beförderungseinrichtung ist im US 2005/155821 A1 zu finden.

Im Hinblick auf fertigungstechnische wie auch wirtschaftliche Aspekte wäre es sinnvoll, standardisiert ausgerüstete Beförderungseinrichtungen herzustellen, sodass jede Beförderungseinrichtung grundsätzlich mit den gleichen Funktionskomponenten ausgestattet ist. Dies wäre fertigungstechnisch zwar prinzipiell möglich, es besteht bis dato allerdings keine zufriedenstellende Lösung dahin, eine wenigstens herstellerseitig weiterhin gewünschte Abstufung der Beförderungseinrichtungen in unterschiedliche Beförderungseinrichtungsklassen bzw. - baureihen zu realisieren.

Der Erfindung liegt die Aufgabe zugrunde, ein demgegenüber, insbesondere im Hinblick auf die Möglichkeit der Herstellung standardisiert ausgerüsteter Beförderungseinrichtungen, welche jedoch gleichermaßen eine Abstufung unterschiedlicher Beförderungseinrichtungsklassen bzw. - baureihen erlaubt, verbesserte Beförderungseinrichtung anzugeben.

Die Aufgabe wird durch eine Beförderungseinrichtung gemäß Anspruch 1 gelöst. Die hierzu abhängigen Ansprüche betreffen mögliche Ausführungsformen der Beförderungseinrichtung.

Bei der hierin beschriebenen Beförderungseinrichtung kann es sich prinzipiell um jedwede Beförderungseinrichtung zur Beförderung von Personen und/oder Gegenständen entlang eines zwischen einem Fahrweganfangspunkt und einem Fahrwegendpunkt definierten Fahrwegs. Die Beförderungseinrichtung umfasst typischerweise wenigstens eine Funktionskomponente, d. h. z. B. eine einen Kabinenraum bzw. Kabineninnenraum aufweisende Kabine zur Aufnahme von mit der Beförderungseinrichtung zu befördernden Personen und/oder Gegenständen, welche in wenigstens einer Bewegungsrichtung entlang des zwischen dem Fahrweganfangspunkt und dem Fahrwegendpunkt definierten Fahrwegs bewegbar ist. Eine solche Funktionskomponente ist typischerweise ausschließlich entlang des definierten Fahrwegs bewegbar. Je nach konkreter Ausgestaltung der Beförderungseinrichtung kann es sich um einen horizontal, vertikal oder winklig geneigt bezüglich einer horizontalen oder vertikalen Referenzachse ausgerichteten Fahrweg handeln; selbstverständlich kann der Fahrweg auch unterschiedlich ausgerichtete Fahrwegabschnitte umfassen, d. h. z. B. einen ersten horizontal ausgerichteten Fahrwegabschnitt und wenigstens einen winklig geneigt bezüglich einer horizontalen Referenzachse ausgerichteten weiteren Fahrwegabschnitt. Der Fahrweg ist typischerweise durch eine ein oder mehrere, z. B. als Führungsschienen ausgebildete oder solche umfassende, Führungselemente umfassende Führungseinrichtung definiert.

Die hierin beschriebene Beförderungseinrichtung ist typischerweise in einem Bauwerk verbaut, d. h. fest mit einem Bauwerk verbunden. Die Beförderungseinrichtung stellt sonach einen, typischerweise untrennbar, mit einer Bauwerkskonstruktion verbundenen Bestandteil eines Bauwerks dar. Bei der Beförderungseinrichtung handelt es sich deshalb nicht um ein frei bewegliches Land-, Luft- oder Wasserfahrzeug. Die Beförderungseinrichtung ist sonach kein Kraftfahrzeug, Luftfahrzeug, wie ein Flugzeug oder Hubschrauber, oder Wasserfahrzeug, wie ein Boot oder Schiff.

Die Beförderungseinrichtung kann konkret beispielsweise als Personenaufzug, umfassend wenigstens eine in einem durch eine Führungseinrichtung definierten Fahrweg geführt bewegbar gelagerte Kabine zur Aufnahme von Personen, als Lastenaufzug, umfassend wenigstens eine in einem durch eine Führungseinrichtung definierten Fahrweg geführt bewegbar gelagerte Kabine zur Aufnahme von Gegenständen, als Fahrsteig oder als Rolltreppe ausgebildet sein.

Die Beförderungseinrichtung weist typischerweise eine Mehrzahl an Funktionskomponenten auf. Jede Funktionskomponente übernimmt in ihrem Betrieb bzw. im Betrieb der Beförderungseinrichtung eine bestimmte Funktion und weist somit eine bestimmte Funktionalität auf. Jede Funktionskomponente ist (beschädigungs- bzw. zerstörungsfrei) lösbarer oder unlösbarer Bestandteil der Beförderungseinrichtung der Beförderungseinrichtung; mit anderen Worten ist jede Funktionskomponente unmittelbar oder mittelbar, d. h. unter Zwischenschaltung wenigstens einer weiteren Funktionskomponente, an einer beförderungseinrichtungsseitigen Grundstruktur angebunden. Jede Funktionskomponente kann grundsätzlich auch als Beförderungseinrichtungskomponente bezeichnet bzw. erachtet werden.

Unabhängig von ihrer konkreten Ausgestaltung weist wenigstens eine Funktionskomponente der Beförderungseinrichtung wenigstens zwei Betriebsmodi bzw. allgemein Modi auf, in welchen diese Funktionskomponente betrieben werden kann.

Der Betrieb der Funktionskomponente kann in einem ersten Betriebsmodus (erster Modus) eingeschränkt oder gesperrt sein. Ist der Betrieb der Funktionskomponente in dem ersten Betriebsmodus eingeschränkt, ist dem Betrieb der Funktionskomponente ein wenigstens einen ersten Betriebsparameter umfassender erster Betriebsparametersatz zugrunde gelegt; die Funktionskomponente kann in diesem ersten Betriebsmodus grundsätzlich in Betrieb genommen werden. Der Betrieb der Funktionskomponente auf Grundlage des ersten Betriebsparametersatzes ermöglicht sonach jedenfalls eine Inbetriebnahme und einen Betrieb der Funktionskomponente. In dem ersten Betriebsmodus ist der Funktions- bzw. Leistungsumfang der Funktionskomponente, welcher wiederum von der konkreten Ausgestaltung der Funktionskomponente abhängt, jedoch (im Vergleich zu einem weiteren Betriebsmodus) beschränkt. Der erste Betriebsmodus zeichnet sich sonach dadurch aus, dass der Funktions- bzw. Leistungsumfang der jeweiligen Funktionskomponente im Hinblick auf deren vollen Funktions- bzw. Leistungsumfang wenigstens beschränkt ist. Der volle Funktions- bzw. Leistungsumfang der Funktionskomponente steht daher nicht zur Verfügung. Ist der Betrieb der Funktionskomponente in dem ersten Betriebsmodus gesperrt, kann die Funktionskomponente nicht in Betrieb genommen werden. Dies kann z. B. durch eine teilweise Abtrennung ("Standby") oder eine vollständige Abtrennung der Funktionskomponente von einer Energieversorgungseinrichtung realisiert sein.

Ist der Betrieb der Funktionskomponente in dem ersten Betriebsmodus gesperrt, kann der Betrieb der Funktionskomponente in einem zweiten bzw. weiteren Betriebsmodus (weiterer Modus) nicht (mehr) gesperrt sein; die Funktionskomponente kann also in dem weiteren Betriebsmodus in Betrieb genommen werden. Dem Betrieb der Funktionskomponente in diesem weiteren Betriebsmodus ist ein wenigstens einen (weiteren) Betriebsparameter umfassender (weiterer) Betriebsparametersatz zugrunde gelegt. Der Betrieb der Funktionskomponente auf Grundlage des (weiteren) Betriebsparametersatzes ermöglicht jedenfalls eine Inbetriebnahme und einen Betrieb der Funktionskomponente. In diesem weiteren Betriebsmodus kann der Funktions- bzw. Leistungsumfang der Funktionskomponente, welcher, wie erwähnt, von der konkreten Ausgestaltung der Funktionskomponente abhängt, beschränkt sein. Denkbar ist es jedoch auch, dass der Funktions- bzw. Leistungsumfang der Funktionskomponente in diesem weiteren Betriebsmodus nicht beschränkt ist, d. h. die Funktionskomponente mit ihrem vollen Funktions- bzw. Leistungsumfang betrieben werden kann. Ist der Betrieb der Funktionskomponente in dem ersten Betriebsmodus nicht gesperrt, d. h. ist dem Betrieb der Funktionskomponente in dem ersten Betriebsmodus ein wenigstens einen ersten Betriebsparameter umfassender erster Betriebsparametersatz zugrunde gelegt, ist dem Betrieb der Funktionskomponente in dem zweiten bzw. weiteren Betriebsmodus ein wenigstens einen von dem ersten Betriebsparameter unterschiedlichen weiteren Betriebsparameter umfassender weiterer Betriebsparametersatz zugrunde gelegt. In diesem weiteren Betriebsmodus ist der Funktions- bzw. Leistungsumfang der Funktionskomponente im Vergleich zu dem ersten Betriebsmodus weniger beschränkt oder - im Sinne einer vollständigen Aufhebung der Beschränkung des Funktions- bzw. Leistungsumfangs - nicht mehr beschränkt. Der weitere Betriebsmodus zeichnet sich sonach jedenfalls dadurch aus, dass der Funktions- bzw. Leistungsumfang der jeweiligen Funktionskomponente im Hinblick auf deren vollen Funktions- bzw. Leistungsumfang im Vergleich zu dem ersten Betriebsmodus weniger beschränkt ist. Der weitere Betriebsmodus gestattet daher einen Betrieb der jeweiligen Funktionskomponente mit einem im Vergleich zu dem ersten Betriebsmodus erweiterten Funktions- und/oder Leistungsumfang.

Einer in den jeweiligen Betriebsmodi bzw. Modi betreibbaren Funktionskomponente ist eine beförderungseinrichtungsseitig vorhandene, gegebenenfalls zentrale, hard- und/oder softwaremäßig implementierte Steuereinrichtung zuordenbar bzw. zugeordnet. Die Steuereinrichtung ist zur Aktivierung des ersten oder des wenigstens einen weiteren Betriebsmodus und zur Steuerung des Betriebs der jeweiligen Funktionskomponente(n) auf Grundlage des jeweils aktivierten Betriebsmodus eingerichtet. Zur Aktivierung eines Betriebsmodus und zur Steuerung des Betriebs der Funktionskomponente auf Grundlage des jeweils aktivierten Betriebsmodus kann die Steuereinrichtung geeignete Steuerinformationen erzeugen und, z. B. über eine beförderungseinrichtungsseitige Kommunikationsstruktur, d. h. z. B. eine Bus- oder Netzwerkstruktur, an die jeweilige Funktionskomponente, d. h. insbesondere ein der jeweiligen Funktionskomponente zugehöriges Steuergerät, übertragen.

Wesentlich an der Beförderungseinrichtung ist, dass die Steuereinrichtung ferner eingerichtet ist, den wenigstens einen weiteren Betriebsmodus (nur) in Abhängigkeit des Vorliegens einer Bezahlinformation zu aktivieren und dem Betrieb der Funktionskomponente zugrunde zu legen. Mit anderen Worten ist die Steuereinrichtung eingerichtet, den wenigstens einen weiteren Betriebsparametersatz dem Betrieb der wenigstens einen Funktionskomponente in Abhängigkeit des Vorliegens einer entsprechenden Bezahlinformation und somit in Abhängigkeit eines durch die Bezahlinformation beschriebenen benutzerseitigen Bezahlvorgangs zugrunde zu legen. Eine Bezahlinformation beschreibt einen wenigstens eine Aktivierung des wenigstens einen weiteren Betriebsmodus betreffenden benutzerseitigen, d. h. benutzerseitig vorgenommenen, Bezahlvorgang. Demnach ist die Steuereinrichtung eingerichtet, dem Betrieb der wenigstens einen Funktionskomponente den wenigstens einen weiteren Betriebsparametersatz in Abhängigkeit eines durch die Bezahlinformation beschriebenen benutzerseitigen Bezahlvorgangs zugrunde zu legen. Es ist also möglich, über die Vornahme eines entsprechenden Bezahlvorgangs, welcher durch eine daraufhin, z. B. seitens eines Zahlungsempfängers, erzeugte und an die Steuereinrichtung übertragene Bezahlinformation beschrieben ist, bedarfsweise ("on demand") den Funktions- und Leistungsumfang einer Funktionskomponente - wie sich aus den im Weiteren erläuterten Beispielen ergibt, kann z. B. die Leistungsaufnahme bzw. Leistung eines beförderungseinrichtungsseitigen Antriebsaggregats als Beispiel für eine entsprechende Funktionskomponente bedarfsweise erweitert werden - zu erweitern bzw. zu verändern.

Ein Bezahlvorgang kann prinzipiell auf jedwede Weise vorgenommen werden. Der Benutzer kann den Bezahlvorgang etwa an einer räumlich-körperlichen Bezahlstation vornehmen. Eine entsprechende Bezahlstation kann außerhalb oder innerhalb der Beförderungseinrichtung, d. h. insbesondere außerhalb oder innerhalb einer der Beförderungseinrichtung zugehörigen Kabine zur Aufnahme von mit der Beförderungseinrichtung zu befördernden Personen und/oder Gegenständen, vorgesehen sein. Denkbar ist es selbstverständlich auch, dass ein Benutzer Bezahlvorgänge über geeignete Software an einen virtuellen Zahlungsempfänger, d. h. z. B. über ein Internet-Zahlungsportal, vornehmen kann. Eine entsprechende Software kann z. B., gegebenenfalls als eigenes Benutzersubmenü, in eine beförderungseinrichtungsseitige Benutzerschnittstelle, wie z. B. eine beförderungseinrichtungsseitige Multimediaeinrichtung integriert sein. Eine entsprechende Software kann alternativ oder ergänzend z. B. auch als Programm ("App") für ein benutzerseitiges (portables) Endgerät, z. B. ein Notebook, ein Tablet, ein Handy oder ein Smartphone, implementiert sein.

Der für eine Aktivierung des wenigstens einen weiteren Betriebsmodus erforderliche Betrag kann in Abhängigkeit bestimmter Nutzereigenschaften bzw. eines bestimmten Nutzer- bzw. Nutzungsverhaltens variieren. Eine Bezahlinformation kann insofern bestimmte Nutzereigenschaften bzw. ein bestimmtes Nutzer- bzw. Nutzungsverhalten berücksichtigen bzw. auf Grundlage bestimmter Nutzereigenschaften bzw. eines bestimmten Nutzer- bzw. Nutzungsverhaltens erstellt werden.

Eine entsprechende Nutzereigenschaft kann beispielsweise eine, mehrere oder sämtliche die Abnutzung und den Verschleiß der Beförderungseinrichtung beeinflussende bzw. betreffende Eigenschaften, d. h. z. B. das Gewicht, wenigstens eines die Beförderungseinrichtung nutzenden Nutzers betreffen. Entsprechende Eigenschaften eines Nutzers können über geeignete der Beförderungseinrichtung zugehörige, gegebenenfalls in diese integrierte, Erfassungseinrichtungen erfasst werden. Das Gewicht eines Nutzers kann z. B. durch eine der Beförderungseinrichtung zugehörige, gegebenenfalls in diese integrierte Gewichtserfassungseinrichtung erfasst werden. Entsprechende Erfassungseinrichtungen können mit geeigneten Auswerteeinheiten ausgestattet sein, welche eine Auswertung der Nutzereigenschaften im Hinblick auf für Abnutzung und Verschleiß der Beförderungseinrichtung relevante und nicht bzw. weniger relevante Nutzereigenschaften ermöglicht.

Ein entsprechendes Nutzerverhalten kann eine, mehrere oder sämtliche die Abnutzung und den Verschleiß der Beförderungseinrichtung beeinflussende bzw. betreffende Verhaltensweisen, d. h. z. B. (sprunghafte) Bewegungen, wenigstens eines die Beförderungseinrichtung nutzenden Benutzers betreffen. Entsprechende Verhaltensweisen eines Nutzers können über geeignete der Beförderungseinrichtung zugehörige, gegebenenfalls in diese integrierte, Erfassungseinrichtungen erfasst werden. Entsprechende Erfassungseinrichtungen können z. B. akustisch, optisch oder mechanisch ausgebildet und mit geeigneten Auswerteeinheiten, d. h. z. B. einer optischen Bewegungserkennung und -auswertung, ausgestattet sein, welche eine Auswertung des Nutzerverhaltens im Hinblick auf für Abnutzung und Verschleiß der Beförderungseinrichtung relevante und nicht bzw. weniger relevante Verhaltensweisen ermöglicht.

Ein entsprechendes Nutzungsverhalten kann eine, mehrere oder sämtliche die Abnutzung und den Verschleiß der Beförderungseinrichtung beeinflussende bzw. betreffende Verhaltensweisen, d. h. z. B. eine typischerweise im Hinblick auf einen bestimmten Referenzwert zu bestimmende weniger häufige oder häufige Nutzung, wenigstens eines die Beförderungseinrichtung nutzenden Benutzers betreffen. Das Nutzungsverhalten eines Nutzers kann über geeignete der Beförderungseinrichtung zugehörige, gegebenenfalls in diese integrierte Erfassungseinrichtungen erfasst werden. Entsprechende Erfassungseinrichtungen können z. B. akustisch oder optisch ausgebildet und mit geeigneten Auswerteeinheiten, d. h. z. B. einer akustischen oder optischen Nutzererkennung, ausgestattet sein, welche eine Auswertung des Nutzungsverhaltens im Hinblick auf für Abnutzung und Verschleiß der Beförderungseinrichtung relevante und nicht bzw. weniger relevante Häufigkeit der Nutzung ermöglicht.

Wesentlich ist in allen Fällen, dass der eigentliche Bezahlvorgang nicht Bestandteil der Erfindung ist.

Die beschriebene Konfiguration der Beförderungseinrichtung ermöglicht die Herstellung standardisiert ausgerüsteter Beförderungseinrichtungen, wobei jede Beförderungseinrichtung grundsätzlich mit den gleichen Funktionskomponenten und somit dem gleichen Funktions- bzw. Leistungsumfang ausgestattet ist. Durch die Möglichkeit, beförderungseinrichtungsseitige Funktionskomponenten in wenigstens zwei unterschiedlichen Betriebsmodi bzw. Modi zu betreiben, ist eine einfache und zufriedenstellende Lösung zur Realisierung einer Abstufung der Beförderungseinrichtungen in unterschiedliche Beförderungseinrichtungsklassen bzw. -baureihen gegeben. Dies kann z. B. dadurch realisiert sein, dass bei höheren Beförderungseinrichtungsklassen bzw. -baureihen hersteller- bzw. werksseitig bereits (mehrere) Funktionskomponenten mit einem im Vergleich erweiterten Funktions- bzw. Leistungsumfang aktiviert bzw. freigeschaltet sein können als bei niedrigeren Beförderungseinrichtungsklassen bzw. -baureihen.

Die Steuereinrichtung kann eingerichtet sein, den Betrieb der wenigstens einen Funktionskomponente auf Grundlage des wenigstens einen weiteren Betriebsmodus nach dessen Aktivierung in Abhängigkeit des Vorliegens einer wenigstens eine benutzerseitige Freigabe des aktivierten Betriebsmodus beschreibenden Freigabeinformation zu steuern. Die Aktivierung eines weiteren Betriebsmodus kann sonach (nur) eine grundsätzliche Bereitstellung des in dem jeweiligen weiteren Betriebsmodus gegebenen erweiterten Funktions- bzw. Leistungsumfangs der jeweiligen Funktionskomponente darstellen. Die tatsächliche Nutzung des erweiterten Funktions- bzw. Leistungsumfangs der jeweiligen Funktionskomponente kann an eine durch eine entsprechende Freigabeinformation beschriebene benutzerseitige Freigabe geknüpft sein. Eine benutzerseitige Freigabe kann z. B. durch wenigstens eine benutzerseitige Bedienhandlung, wie z. B. die Betätigung eines, z. B. beförderungseinrichtungsseitigen, Betätigungselements und/oder die Gabe eines Sprachbefehls, erfolgen. Eine entsprechende benutzerseitige Bedienhandlung kann auch über ein benutzerseitiges (portables) Endgerät gegeben und über eine geeignete, insbesondere drahtlose, Kommunikationsverbindung an die Beförderungseinrichtung übertragen werden.

Es ist grundsätzlich denkbar, dass mehrere weitere Betriebsmodus bzw. Modi vorgesehen sind. In diesem Fall kann ein erster weiterer Betriebsmodus (zweiter Betriebsmodus) einen Betrieb der Funktionskomponente mit einem im Vergleich zu dem ersten Betriebsmodus erweiterten Funktions- und/oder Leistungsumfang der Funktionskomponente gestatten. Ein zweiter weiterer Betriebsmodus (dritter Betriebsmodus) kann einen Betrieb der Funktionskomponente mit einem im Vergleich zu dem diesem (unmittelbar) vorangehenden weiteren Betriebsmodus (zweiten Betriebsmodus) erweiterten Funktions- und/oder Leistungsumfang der Funktionskomponente gestatten. Dieses Prinzip kann beliebig fortgesetzt werden. Die Aktivierung eines jeweiligen weiteren Betriebsmodus ist typischerweise mit dem Vorliegen einer entsprechenden Bezahlinformation verknüpft.

Im Weiteren werden in nicht abschließender Weise Beispiele für entsprechende Funktionskomponenten der Beförderungseinrichtung gegeben:
Eine Funktionskomponente kann ein einen Teil einer beförderungseinrichtungsseitigen Antriebseinrichtung bildendes Antriebsaggregat sein oder ein solches umfassen. Ein Antriebsaggregat kann z. B. ein elektrischer oder hydraulischer Antrieb sein. Ein Antriebsaggregat kann wenigstens einen Antriebsmotor umfassen. Ein Betriebsparameter kann jedweder den Betrieb, insbesondere die Leistung und/oder den Energieverbrauch, des Antriebsaggregats beeinflussender Parameter sein. Beispielsweise kann das Antriebsaggregat in dem ersten Betriebsmodus mit einer ersten Leistung(saufnahme) und/oder einem ersten Energieverbrauch und in dem weiteren Betriebsmodus mit einer im Vergleich höheren zweiten Leistung(saufnahme) und/oder einem im Vergleich geringeren weiteren Energieverbrauch betrieben werden. Konkret kann dies z. B. bedeuten, dass eine Bewegung der entlang des Fahrwegs bewegbaren Funktionskomponente der Beförderungseinrichtung, d. h. z. B. einer personenbeförderungseinrichtungsseitigen Kabine, in dem zweiten Betriebsmodus, d. h. z. B. aufgrund einer im Vergleich höheren zweiten Leistung(saufnahme) des Antriebsaggregats, schneller erfolgen kann als in dem ersten Betriebsmodus. Der Betrieb eines Antriebsaggregats mit unterschiedlichen Leistungsaufnahmen bzw. Energieverbräuchen in den jeweiligen Betriebsmodi kann z. B. durch gezielte Veränderung des Arbeitspunkts bzw. der Kennlinie des Antriebsaggregats realisiert werden.

Eine Funktionskomponente kann auch eine Steuereinrichtung zur Steuerung der Bewegung einer personenbeförderungseinrichtungsseitigen Kabine zur Aufnahme von mit der Beförderungseinrichtung zu befördernden Personen und/oder Gegenständen entlang des Fahrwegs, insbesondere zur Steuerung von Unterbrechungen einer Bewegung der Kabine, insbesondere durch wenigstens einen Zwischenhalt, zwischen einem benutzerseitig vorgebbaren oder vorgegebenen Fahrweganfangspunkt und einem benutzerseitig vorgebbaren oder vorgegebenen Fahrweganfangspunkt, sein oder eine solche umfassen. Die Steuereinrichtung kann eingerichtet sein, eine Bewegung der Kabine entlang eines durch einen benutzerseitig vorgebbaren oder vorgegebenen Fahrweganfangspunkt und einen benutzerseitig vorgebbaren oder vorgegebenen Fahrweganfangspunkt benutzerseitig vorgebbaren oder vorgegebenen Fahrweg in dem ersten Betriebsmodus mit einer ersten Anzahl an, z. B. durch das Zusteigen von Benutzern in die Kabine bedingten, Unterbrechungen zu steuern und eine Bewegung der Kabine entlang des Fahrwegs in einem zweiten Betriebsmodus mit einer anderen, d. h. insbesondere geringeren, Anzahl an Unterbrechungen zu steuern. Für das Beispiel eines Aufzugs, d. h. z. B. eines Personenaufzugs, und einem beispielhaften Fahrweg zwischen einer ersten und einer zwölften Etage kann eine Kabine in dem zweiten Betriebsmodus sonach ohne Zwischenhalt zwischen der ersten und der zwölften Etage bewegt werden. Selbstverständlich kann eine Kabine in dem zweiten Betriebsmodus auch ohne Unterbrechungen entlang eines durch einen benutzerseitig vorgebbaren oder vorgegebenen Fahrweganfangspunkt und einen benutzerseitig vorgebbaren oder vorgegebenen Fahrweganfangspunkt benutzerseitig vorgebbaren oder vorgegebenen Fahrweg bewegt werden.

Eine Funktionskomponente kann auch eine einer Zugangsmöglichkeit bzw. -öffnung in eine personenbeförderungseinrichtungsseitige Kabine zur Aufnahme von mit der Beförderungseinrichtung zu befördernden Personen und/oder Gegenständen zugeordnete Schließeinrichtung, welche wenigstens ein zwischen einer Offenstellung, in welcher ein Zutritt eines Benutzers in die Kabine durch die Zugangsmöglichkeit möglich ist, und einer Schließposition, in welcher kein Zutritt eines Benutzers in die Kabine durch die Zugangsmöglichkeit möglich ist, bewegbares, insbesondere türartiges- oder -förmiges, Schließelement umfasst, sein oder eine solche umfassen. Insbesondere kann die Funktionskomponente eine einer entsprechenden Schließeinrichtung zugehörige Steuereinrichtung zur Steuerung von Bewegungen des wenigstens einen Schließelements, insbesondere zwischen der Offen- und der Schließposition, sein oder eine solche umfassen. Die Steuereinrichtung kann z. B. eingerichtet sein, dem Betrieb der Schließeinrichtung in einem ersten Betriebsmodus einen ersten Betriebsparameter(satz) und in dem zweiten Betriebsmodus einen zweiten Betriebsparameter(satz) zugrunde zu legen. Über einen entsprechenden ersten und zweiten Betriebsparameter(satz) können diverse Betriebsparameter der Schließeinrichtung, d. h. z. B. die Bewegungsgeschwindigkeit eines Schließelements, insbesondere zwischen der Offen- und der Schließposition, die Öffnungszeit des in die Offenposition bewegten Schließelements, bevor dieses in die Schließposition bewegt wird, etc., gesteuert werden; mithin ist es z. B. möglich, dass ein Schließelement in dem ersten Betriebsmodus mit einer ersten Bewegungsgeschwindigkeit und in dem zweiten Betriebsmodus mit einer zweiten, d. h. im Vergleich niedrigeren oder höheren, Bewegungsgeschwindigkeit bewegt wird und/oder ein Schließelement in dem ersten Betriebsmodus eine erste Öffnungsweit und in dem zweiten Betriebsmodus eine zweite, d. h. im Vergleich niedrigere oder höhere Öffnungszeit, bevor es ausgehend von der Offenposition in die Schließposition bewegt wird, aufweist.

Eine Funktionskomponente kann auch eine wenigstens einer Aussichtsmöglichkeit bzw. -öffnung, hierbei kann es sich z. B. um ein Sichtfenster handeln, aus einer personenbeförderungseinrichtungsseitigen Kabine zur Aufnahme von mit der Beförderungseinrichtung zu befördernden Personen und/oder Gegenständen zugeordnete Schließeinrichtung, welche wenigstens ein zwischen einer Offenstellung, in welcher eine Aussicht eines Benutzers aus der Kabine durch die Aussichtsmöglichkeit möglich ist, und einer Schließposition, in welcher keine Aussicht eines Benutzers aus der Kabine durch die Aussichtsmöglichkeit möglich ist, bewegbares, insbesondere schieberartiges- oder -förmiges, Schließelement umfasst, sein oder eine solche umfassen. Insbesondere kann die Funktionskomponente eine einer entsprechenden Schließeinrichtung zugehörige Steuereinrichtung zur Steuerung von Bewegungen des wenigstens einen Schließelements, insbesondere zwischen der Offen- und der Schließposition, sein oder eine solche umfassen. Die Steuereinrichtung kann z. B. eingerichtet sein, in dem ersten Betriebsmodus keine Bewegung des Schließelements von der Schließ- in die Offenposition zu ermöglichen - hierunter kann gegebenenfalls auch eine begrenzte Bewegung des Schließelements in Richtung der Offenposition zu verstehen sein, welche noch keine vollständige Aussicht aus der Kabine durch die Aussichtsmöglichkeit bzw. -öffnung zulässt - zu ermöglichen und in dem zweiten Betriebsmodus eine Bewegung des Schließelements von der Schließ- in die Offenposition, welche eine vollstände Aussicht aus der Kabine durch die Aussichtsmöglichkeit bzw. -öffnung zulässt - zu ermöglichen. Auch ist es möglich, dass eine entsprechende Steuereinrichtung eingerichtet ist, dem Betrieb der Schließeinrichtung in einem ersten Betriebsmodus einen ersten Betriebsparameter(satz) und in dem zweiten Betriebsmodus einen zweiten Betriebsparameter(satz) zugrunde zu legen. Über einen entsprechenden ersten und zweiten Betriebsparameter(satz) können diverse Betriebsparameter der Schließeinrichtung, d. h. z. B. die Bewegungsgeschwindigkeit eines Schließelements, insbesondere zwischen der Offen- und der Schließposition, die Öffnungszeit des in die Offenposition bewegten Schließelements, bevor dieses in die Schließposition bewegt wird, etc., gesteuert werden; mithin ist es z. B. möglich, dass ein Schließelement in dem ersten Betriebsmodus mit einer ersten Bewegungsgeschwindigkeit und in dem zweiten Betriebsmodus mit einer zweiten, d. h. im Vergleich niedrigeren oder höheren, Bewegungsgeschwindigkeit bewegt wird und/oder ein Schließelement in dem ersten Betriebsmodus eine erste Öffnungsweit und in dem zweiten Betriebsmodus eine zweite, d. h. im Vergleich z. B. höhere Öffnungszeit, bevor es ausgehend von der Offenposition in die Schließposition bewegt wird, aufweist.

Eine Funktionskomponente kann auch eine zur Ausgabe von Signalen in wenigstens einen Teil einer beförderungseinrichtungsseitigen Kabine zur Aufnahme von mit der Beförderungseinrichtung zu befördernden Personen und/oder Gegenständen eingerichtete Signalausgabeeinrichtung, insbesondere als Bestandteil einer beförderungseinrichtungsseitigen Multimediaeinrichtung, sein oder eine solche umfassen. Eine entsprechende Signalausgabeeinrichtung kann z. B. eine Audio- und/oder Videoanlage sein. Ein Betriebsparameter kann jedweder den Betrieb, insbesondere den Funktions- und/oder Leistungsumfang, der Signalausgabeeinrichtung beeinflussender Parameter sein. Beispielsweise kann die Signalausgabeeinrichtung in dem ersten Betriebsmodus, sofern die Signalausgabeeinrichtung in diesem überhaupt in Betrieb genommen werden kann, zur Ausgabe von Signalen einer ersten Qualität, d. h. z. B. zur Ausgabe von Stereosignalen, und/oder zum Empfang von analog empfangbaren Radio- und/oder TV-Sendern und in dem weiteren Betriebsmodus z. B. zur Ausgabe von Signalen einer im Vergleich höheren zweiten Qualität, d. h. z. B. zur Ausgabe von Surroundsignalen, und/oder zum Empfang von digital empfangbaren Radio- und/oder TV-Sendern eingerichtet sein.

Eine Funktionskomponente kann auch eine zur Steuerung der klimatischen Verhältnisse in wenigstens einem Teil einer beförderungseinrichtungsseitigen Kabine zur Aufnahme von mit der Beförderungseinrichtung zu befördernden Personen und/oder Gegenständen eingerichtete Klimaeinrichtung sein oder eine solche umfassen. Eine entsprechende Klimaeinrichtung kann z. B. eine Klimatisierungs- oder eine Heizungseinrichtung sein. Ein Betriebsparameter kann jedweder den Betrieb, insbesondere den Funktions- und/oder Leistungsumfang, der Klimaeinrichtung beeinflussender Parameter sein. Beispielsweise kann die Klimaeinrichtung in dem ersten Betriebsmodus, sofern die Klimaeinrichtung in diesem überhaupt in Betrieb genommen werden kann, mit einer ersten Leistung(saufnahme) und/oder einem ersten Energieverbrauch und in dem weiteren Betriebsmodus mit einer im Vergleich höheren zweiten Leistung(saufnahme) und/oder einem im Vergleich geringeren zweiten Energieverbrauch betrieben werden. Der Betrieb der Klimaeinrichtung mit den unterschiedlichen Leistung(saufnahm)en bzw. Energieverbräuchen in den jeweiligen Betriebsmodi kann z. B. durch gezielte Veränderung des Arbeitspunkts bzw. der Kennlinie der Klimaeinrichtung realisiert werden.

Eine Funktionskomponente kann auch eine zur, insbesondere funkbasierten, Kommunikation mit einem Kommunikationspartner eingerichtete beförderungseinrichtungsseitige Kommunikationseinrichtung sein oder eine solche umfassen. Eine entsprechende Kommunikationseinrichtung kann z. B. ein eine Funkverbindung, z. B. eine Bluetooth- oder WLAN-Verbindung, mit einem Kommunikationspartner, d. h. z. B. einem portablen Endgerät, insbesondere einem Tablet-PC, einem Handy oder einem Smartphone, ermöglichendes Kommunikationsmodul sein. Ein entsprechendes Kommunikationsmodul kann im Weiteren - z. B. in Form eines Netzwerk-Hubs - eingerichtet sein, eine Kommunikationsverbindung mit einem Kommunikationsnetzwerk, d. h. z. B. einem Intranet oder dem Internet, herzustellen. Ein Betriebsparameter kann jedweder den Betrieb, insbesondere den Funktions- und/oder Leistungsumfang, der Kommunikationseinrichtung beeinflussender Parameter sein. Beispielsweise kann die Kommunikationseinrichtung in dem ersten Betriebsmodus, sofern die Kommunikationseinrichtung in diesem überhaupt in Betrieb genommen werden kann, mit einer ersten Leistung (Funkleistung) bzw. einem ersten Sende- und Empfangsbereich und/oder einem ersten Funkstandard, z. B. einem Bluetooth-Standard, und in dem weiteren Betriebsmodus mit einer im Vergleich höheren Leistung bzw. einem im Vergleich größeren Sende- und Empfangsbereich und/oder einem bestimmten, gegebenenfalls zusätzlichen, Funkstandard, z. B. einem Bluetooth- oder WLAN-Standard, betrieben werden.

Eine Funktionskomponente kann auch eine zur Ausgabe von Fahrweginformationen eingerichtete Navigationseinrichtung sein oder eine solche umfassen. Eine entsprechende Navigationseinrichtung kann z. B. ein eine Anzeige diverser den Fahrweg betreffender Informationen, d. h. z. B. Gesamtfahrweglänge, Gesamtfahrzeit, Restfahrweglänge, Restfahrzeit, etc., ausgebendendes Navigationsgerät sein. Ein Betriebsparameter kann jedweder den Betrieb, insbesondere den Funktions- und/oder Leistungsumfang, der Navigationseinrichtung beeinflussender Parameter sein. Beispielsweise kann die Navigationseinrichtung in dem ersten Betriebsmodus, sofern die Navigationseinrichtung in diesem überhaupt in Betrieb genommen werden kann, Fahrweginformationen mit einem bestimmten Informationsgehalt ausgeben und in dem weiteren Betriebsmodus Fahrweginformationen mit einem im Vergleich, z. B. hinsichtlich des Umfangs und/oder des Detaillierungsgrads, erweiterten Informationsgehalt ausgeben.

Eine Funktionskomponente kann auch eine zur Bereitstellung einer bestimmten Anzahl und/oder Anordnung von Sitzplätzen innerhalb wenigstens eines Teils einer personenbeförderungseinrichtungsseitigen Kabine zur Aufnahme von mit der Beförderungseinrichtung zu befördernden Personen und/oder Gegenständen eingerichtete Sitzplatzeinrichtung sein oder eine solche umfassen. Eine solche Sitzplatzeinrichtung kann z. B. eine Sitzbewegungseinrichtung, welche zur Bewegung wenigstens eines Sitzes zwischen einer Nutzstellung, in welcher der Sitz von einem Benutzer als Sitz genutzt werden kann, und einer Verstaustellung, in welcher der Sitz verstaut ist und von einem Benutzer nicht als Sitz genutzt werden kann, sein. Ein Betriebsparameter kann jedweder den Betrieb, insbesondere den Funktions- und/oder Leistungsumfang, der Sitzplatzeinrichtung beeinflussender Parameter sein. Beispielsweise kann die Sitzplatzeinrichtung in dem ersten Betriebsmodus gesperrt sein, d. h. die Bewegung eines Sitzes im Allgemeinen zwischen einer Nutz- und einer Verstaustellung, im Besonderen ausgehend von einer Verstaustellung in eine Nutzstellung, ist nicht möglich, und in dem weiteren Betriebsmodus nicht gesperrt sein, d. h. die Bewegung eines Sitzes zwischen einer Nutz- und einer Verstaustellung ist möglich.

Eine Funktionskomponente kann auch eine zur Freigabe eines eine Aussicht aus einer personenbeförderungseinrichtungsseitigen Kabine zur Aufnahme von mit der Beförderungseinrichtung zu befördernden Personen und/oder Gegenständen ermöglichenden Sichtfensters eingerichtete Sichtfensterfreigabeeinrichtung sein oder eine solche umfassen.

Die Steuereinrichtung kann eingerichtet sein, die Aktivierung des wenigstens einen weiteren Betriebsmodus in Abhängigkeit einer wenigstens ein Zeitkriterium beschreibenden Zeitinformation und/oder in Abhängigkeit einer wenigstens ein Streckenkriterium beschreibenden Streckeninformation und/oder in Abhängigkeit einer wenigstens ein Klimakriterium beschreibenden Klimainformation und/oder in Abhängigkeit einer wenigstens ein Verschmutzungskriterium beschreibenden Verschmutzungsinformation aufzuheben. Die Aktivierung eines jeweiligen weiteren Betriebsmodus kann sonach im Hinblick auf bestimmte, durch jeweilige Informationen beschriebene Kriterien beschränkt sein. Die Aktivierung eines jeweiligen weiteren Betriebsmodus bedeutet sonach nicht zwingend eine (zeitlich) unbeschränkte Freischaltung des jeweiligen Betriebsmodus.

Das Zeitkriterium kann eine bestimmte, insbesondere von einer Uhrzeit und/oder einem Datum unabhängige, Zeitdauer, d. h. z. B. eine Zeitdauer von 15 Minuten, 1 Stunde, 2 Tage, 3 Monate, 1 Jahr, etc. sein. Ein Zeitkriterium kann jedoch auch ein bestimmter, insbesondere von einer Uhrzeit und/oder einem Datum abhängiger, Zeitraum zwischen einem, insbesondere benutzerseitig, vorgebbaren bzw. vorgegebenen Anfangszeitpunkt und einem, insbesondere benutzerseitig, vorgebbaren bzw. vorgegebenen Endzeitpunkt, d. h. z. B. ein bestimmter Zeitraum innerhalb eines Tages, wie z. B. ein Zeitraum zwischen 8 und 12 Uhr, ein Zeitraum eines oder mehrerer Tage, insbesondere innerhalb einer (bestimmten) Woche, wie z. B. ein Zeitraum von Montag bis Donnerstag oder von Freitag oder Samstag bis Sonntag (Wochenende), ein Zeitraum eines oder mehrerer Monate, insbesondere innerhalb einer (bestimmten) Jahreszeit, wie z. B. ein Zeitraum von April bis Oktober, oder ein Zeitraum eines oder mehrerer Jahre, wie z. B. ein Zeitraum von 2017 bis 2018, sein.

Das Streckenkriterium kann eine bestimmte, insbesondere von einem bestimmten Fahrweganfangspunkt (hierbei muss es sich nicht zwingend um einen absoluten Anfangspunkt handeln) und einem bestimmten Endpunkt (hierbei muss es sich nicht zwingend um einen absoluten Fahrwegendpunkt handeln) unabhängige, Streckenlänge, d. h. z. B. eine Streckenlänge bzw. Höhendifferenz von 100 m, sein. Ein Streckenkriterium kann jedoch auch eine bestimmte, insbesondere von einem bestimmten Fahrweganfangspunkt und einem bestimmten Fahrwegendpunkt abhängige, Strecke zwischen einem, insbesondere benutzerseitig, vorgebbaren bzw. vorgegebenen Fahrweganfangspunkt und einem, insbesondere benutzerseitig, vorgebbaren bzw. vorgegebenen Fahrwegendpunkt, wie z. B. für das Beispiel einer Beförderungseinrichtung in Form eines in einem Hochhaus verbauten Personenaufzugs ein (bestimmter) Fahrweg z. B. von der ersten Etage in die zwölfte Etage, sein.

Das Klimakriterium kann ein das Klima außerhalb und/oder innerhalb einer beförderungseinrichtungsseitigen Kabine zur Aufnahme von mit der Beförderungseinrichtung zu befördernden Personen und/oder Gegenständen betreffender Klimaparameter, insbesondere eine Feuchtigkeit, ein Druck, eine Temperatur, außerhalb und/oder innerhalb der Kabine sein. Das Über- oder Unterschreiten z. B. einer bestimmten Temperatur kann sonach eine Aufhebung des weiteren Betriebsmodus bedingen. Beispielsweise kann eine Klimaeinrichtung (zur Beheizung oder Kühlung des Kabineninnenraums) bei Unterschreiten einer bestimmten Grenztemperatur deaktiviert werden.

Das Verschmutzungskriterium kann ein die Verschmutzung außerhalb und/oder innerhalb einer beförderungseinrichtungsseitigen Kabine zur Aufnahme von mit der Beförderungseinrichtung zu befördernden Personen und/oder Gegenständen betreffender Verschmutzungsparameter, d. h. insbesondere die chemische Zusammensetzung der Luft, das Vorhandensein bzw. die Konzentration bestimmter chemischer Substanzen und/oder Partikel, insbesondere Feinstaub oder Pollen, etc., außerhalb und/oder innerhalb der Kabine sein.

Jeweilige Kriterien können in Abhängigkeit der Bezahlinformation variabel sein bzw. variiert werden. Ein Benutzer kann durch einen durch eine entsprechende Bezahlinformation beschriebenen Bezahlvorgang sonach Einfluss auf die durch das jeweilige Kriterium mitbestimmte Aufhebung des Betriebs einer Funktionskomponente in dem weiteren Betriebsmodus nehmen. Beispielsweise kann durch eine Bezahlinformation, welche beschreibt, dass der Benutzer eine höhere Summe gezahlt oder eine erneute Zahlung getätigt hat, das Streckenkriterium beeinflussen, sodass der Betrieb der Funktionskomponente in dem weiteren Betriebsmodus z. B. nicht nur für eine Strecke bzw. Höhendifferenz von z. B. 100 m, sondern für eine Strecke bzw. Höhendifferenz von 200 m möglich ist.

Die oder eine weitere Steuereinrichtung kann dazu eingerichtet sein, eine eine Empfehlung einer Aktivierung eines weiteren Betriebsmodus im Hinblick auf eine bestimmte Zielgröße beschreibenden Empfehlungsinformation zu erzeugen und, insbesondere über wenigstens eine beförderungseinrichtungsseitige Signalausgabeeinrichtung z. B. in Form akustischer, optischer und/oder haptischer Signale, an einen Benutzer auszugeben. Eine Zielgröße kann z. B. eine möglichst effiziente Bewegung einer beförderungseinrichtungsseitigen Kabine zur Aufnahme von mit der Beförderungseinrichtung zu befördernden Personen und/oder Gegenständen zwischen einem (benutzerseitig vorgebbaren oder vorgegebenen) Fahrweganfangspunkt und einem (benutzerseitig vorgebbaren oder vorgegebenen) Fahrwegendpunkt sein, welche z. B. einen Zwischenhalt an zwischen dem Fahrweganfangspunkt und dem Fahrwegendpunkt liegenden Positionen unterbindet. Für das Beispiel eines Aufzugs, d. h. z. B. eines Personenaufzugs, und einem beispielhaften Fahrweg zwischen einer ersten und einer zwölften Etage kann eine Empfehlungsinformation sonach z. B. empfehlen, einen weiteren Betriebsmodus zu aktivieren, um Zwischenhalte zwischen einer ersten und einer zwölften Etage unterbinden.

Neben der Beförderungseinrichtung betrifft die Erfindung auch ein Verfahren zum Betrieb einer wie beschriebenen Beförderungseinrichtung. Die verfahrensgemäß betriebene Beförderungseinrichtung umfasst wenigstens eine Funktionskomponente, welche einen ersten Betriebsmodus, in welchem der Betrieb der Funktionskomponente gesperrt ist oder dem Betrieb der Funktionskomponente ein wenigstens einen ersten Betriebsparameter umfassender erster Betriebsparametersatz zugrunde gelegt wird, und wenigstens einen weiteren Betriebsmodus, in welchem der Betrieb der Funktionskomponente nicht gesperrt ist oder dem Betrieb der Funktionskomponente ein wenigstens einen von dem ersten Betriebsparameter unterschiedlichen weiteren Betriebsparameter umfassender weiterer Betriebsparametersatz zugrunde gelegt wird, aufweist. Der wenigstens einen Funktionskomponente ist wenigstens eine Steuereinrichtung, welche zur Aktivierung des ersten oder des wenigstens einen weiteren Betriebsmodus und zur Steuerung des Betriebs der Funktionskomponente auf Grundlage des jeweils aktivierten Betriebsmodus eingerichtet ist, zuordenbar oder zugeordnet. Die Steuereinrichtung kann den wenigstens einen weiteren Betriebsmodus in Abhängigkeit des Vorliegens einer wenigstens einen eine Aktivierung des wenigstens einen weiteren Betriebsmodus betreffenden benutzerseitigen Bezahlvorgang beschreibenden Bezahlinformation aktivieren und der Steuerung des Betriebs der wenigstens einen Funktionskomponente den wenigstens einen weiteren Betriebsparametersatz zugrunde legen.

Sämtliche Ausführungen im Zusammenhang mit der Beförderungseinrichtung gelten analog für das Verfahren.

Die Erfindung ist anhand von Ausführungsbeispielen in den Zeichnungsfiguren näher erläutert. Dabei zeigen:

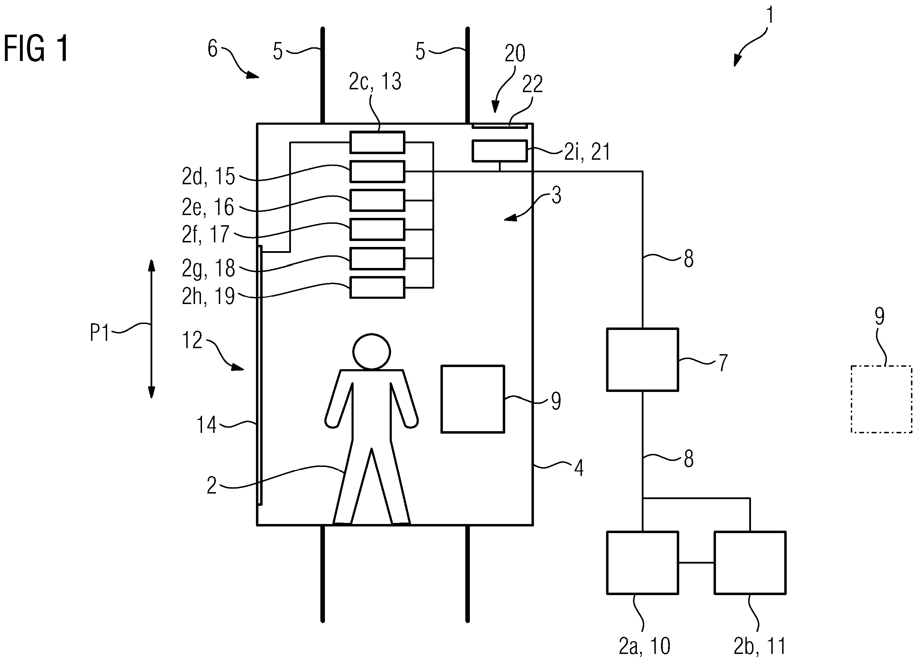

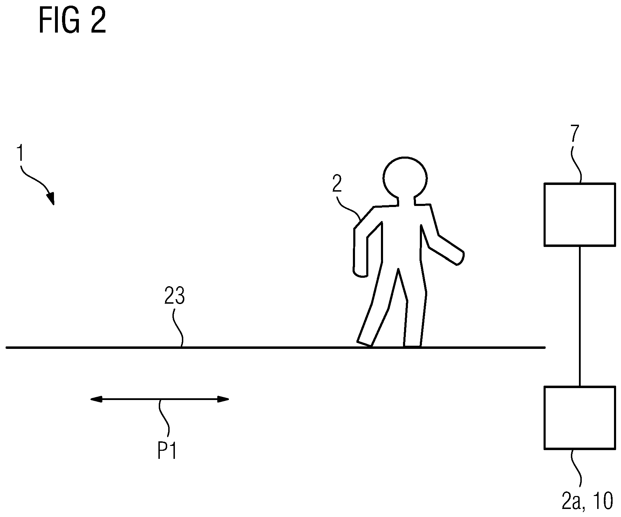

Fig. 1, 2 je eine Prinzipdarstellung einer Beförderungseinrichtung gemäß einem Ausführungsbeispiel

Die Fig. zeigten jeweils eine Prinzipdarstellung einer Beförderungseinrichtung 1 zur Beförderung von Personen 2 und/oder Gegenständen entlang eines zwischen einem Fahrweganfangspunkt und einem Fahrwegendpunkt definierten Fahrwegs. Die Beförderungseinrichtung umfasst typischerweise wenigstens eine Funktionskomponente, d. h. z. B. eine einen Kabinenraum 3 bzw. Kabineninnenraum aufweisende Kabine 4 zur Aufnahme von mit der Beförderungseinrichtung 1 zu befördernden Personen 2 und/oder Gegenständen, welche, wie durch den Doppelpfeil P1 angedeutet, in wenigstens einer Bewegungsrichtung entlang des zwischen dem Fahrweganfangspunkt und dem Fahrwegendpunkt definierten Fahrwegs bewegbar ist. Der Fahrweg ist typischerweise durch eine ein oder mehrere, z. B. als Führungsschienen ausgebildete oder solche umfassende, Führungselemente 5 umfassende Führungseinrichtung 6 definiert.

Die Beförderungseinrichtung 1 ist in einem Bauwerk (nicht gezeigt) verbaut, d. h. fest mit einem Bauwerk verbunden. Die Beförderungseinrichtung 1 stellt sonach einen, typischerweise untrennbar, mit einer Bauwerkskonstruktion (nicht gezeigt) verbundenen Bestandteil eines Bauwerks dar. Bei der Beförderungseinrichtung handelt es sich deshalb nicht um ein frei bewegliches Fahrzeug.

Fig. 1 zeigt eine Prinzipdarstellung einer Beförderungseinrichtung 1 gemäß einem ersten Ausführungsbeispiel. Bei der Beförderungseinrichtung 1 handelt es sich um einen Aufzug, d. h. um einen Personenaufzug zur Beförderung von Personen 2. In analoger Weise könnte es sich bei der Beförderungseinrichtung 1 auch um einen Lastenaufzug zur Beförderung von Gegenständen handeln.

Die Beförderungseinrichtung 1 weist typischerweise eine Mehrzahl an Funktionskomponenten 2a - 2i auf. Jede Funktionskomponente 2a - 2i übernimmt in ihrem Betrieb bzw. im Betrieb der Beförderungseinrichtung 1 eine bestimmte Funktion und weist somit eine bestimmte Funktionalität auf.

Unabhängig von ihrer konkreten Ausgestaltung weist wenigstens eine Funktionskomponente der Beförderungseinrichtung wenigstens zwei Betriebsmodi bzw. allgemein Modi auf, in welchen diese Funktionskomponente betrieben werden kann.

Der Betrieb der Funktionskomponente 2a - 2i kann in einem ersten Betriebsmodus (erster Modus) eingeschränkt oder gesperrt sein. Ist der Betrieb der Funktionskomponente 2a - 2i in dem ersten Betriebsmodus eingeschränkt, ist dem Betrieb der Funktionskomponente 2a - 2i ein wenigstens einen ersten Betriebsparameter umfassender erster Betriebsparametersatz zugrunde gelegt; die Funktionskomponente 2a - 2i kann in diesem ersten Betriebsmodus grundsätzlich in Betrieb genommen werden. Der Betrieb der Funktionskomponente 2a - 2i auf Grundlage des ersten Betriebsparametersatzes ermöglicht sonach jedenfalls eine Inbetriebnahme und einen Betrieb der Funktionskomponente 2a - 2i. In dem ersten Betriebsmodus ist der Funktions- bzw. Leistungsumfang der Funktionskomponente 2a - 2i jedoch (im Vergleich zu einem weiteren Betriebsmodus) beschränkt. Der erste Betriebsmodus zeichnet sich sonach dadurch aus, dass der Funktions- bzw. Leistungsumfang der jeweiligen Funktionskomponente 2a - 2i im Hinblick auf deren vollen Funktions- bzw. Leistungsumfang wenigstens beschränkt ist. Der volle Funktions- bzw. Leistungsumfang der Funktionskomponente 2a - 2i steht daher nicht zur Verfügung. Ist der Betrieb der Funktionskomponente 2a - 2i in dem ersten Betriebsmodus gesperrt, kann die Funktionskomponente 2a - 2i nicht in Betrieb genommen werden. Dies kann z. B. durch eine teilweise Abtrennung ("Standby") oder eine vollständige Abtrennung der Funktionskomponente 2a - 2i von einer Energieversorgungseinrichtung (nicht gezeigt) realisiert sein.

Ist der Betrieb der Funktionskomponente 2a - 2i in dem ersten Betriebsmodus gesperrt, kann der Betrieb der Funktionskomponente 2a - 2i in einem zweiten bzw. weiteren Betriebsmodus (weiterer Modus) nicht (mehr) gesperrt sein; die Funktionskomponente 2a - 2i kann also in dem weiteren Betriebsmodus in Betrieb genommen werden. Dem Betrieb der Funktionskomponente 2a - 2i in diesem weiteren Betriebsmodus ist ein wenigstens einen (weiteren) Betriebsparameter umfassender (weiterer) Betriebsparametersatz zugrunde gelegt. Der Betrieb der Funktionskomponente 2a - 2i auf Grundlage des (weiteren) Betriebsparametersatzes ermöglicht jedenfalls eine Inbetriebnahme und einen Betrieb der Funktionskomponente 2a - 2i. In diesem weiteren Betriebsmodus kann der Funktions- bzw. Leistungsumfang der Funktionskomponente 2a - 2i beschränkt sein. Denkbar ist es jedoch auch, dass der Funktions- bzw. Leistungsumfang der Funktionskomponente 2a - 2i in diesem weiteren Betriebsmodus nicht beschränkt ist, d. h. die Funktionskomponente 2a - 2i mit ihrem vollen Funktions- bzw. Leistungsumfang betrieben werden kann. Ist der Betrieb der Funktionskomponente 2a - 2i in dem ersten Betriebsmodus nicht gesperrt, d. h. ist dem Betrieb der Funktionskomponente 2a - 2i in dem ersten Betriebsmodus ein wenigstens einen ersten Betriebsparameter umfassender erster Betriebsparametersatz zugrunde gelegt, ist dem Betrieb der Funktionskomponente 2a - 2i in dem zweiten bzw. weiteren Betriebsmodus ein wenigstens einen von dem ersten Betriebsparameter unterschiedlichen weiteren Betriebsparameter umfassender weiterer Betriebsparametersatz zugrunde gelegt. In diesem weiteren Betriebsmodus ist der Funktions- bzw. Leistungsumfang der Funktionskomponente 2a - 2i im Vergleich zu dem ersten Betriebsmodus weniger beschränkt oder - im Sinne einer vollständigen Aufhebung der Beschränkung des Funktions- bzw. Leistungsumfangs - nicht mehr beschränkt. Der weitere Betriebsmodus zeichnet sich sonach jedenfalls dadurch aus, dass der Funktions- bzw. Leistungsumfang der jeweiligen Funktionskomponente 2a - 2i im Hinblick auf deren vollen Funktions- bzw. Leistungsumfang im Vergleich zu dem ersten Betriebsmodus weniger beschränkt ist. Der weitere Betriebsmodus gestattet daher einen Betrieb der jeweiligen Funktionskomponente 2a - 2i mit einem im Vergleich zu dem ersten Betriebsmodus erweiterten Funktions- und/oder Leistungsumfang.

Einer in den jeweiligen Betriebsmodi bzw. Modi betreibbaren Funktionskomponente 2a - 2i ist eine beförderungseinrichtungsseitig vorhandene, gegebenenfalls zentrale, hard- und/oder softwaremäßig implementierte Steuereinrichtung 7 zugeordnet. Die Steuereinrichtung 7 ist zur Aktivierung des ersten oder des wenigstens einen weiteren Betriebsmodus und zur Steuerung des Betriebs der jeweiligen Funktionskomponente(n) 2a - 2i auf Grundlage des jeweils aktivierten Betriebsmodus eingerichtet. Zur Aktivierung eines Betriebsmodus und zur Steuerung des Betriebs der Funktionskomponente 2a - 2i auf Grundlage des jeweils aktivierten Betriebsmodus kann die Steuereinrichtung 7 geeignete Steuerinformationen erzeugen und, z. B. über eine lediglich durch von der Steuereinrichtung 7 ausgehende Linien 8 angedeutete beförderungseinrichtungsseitige Kommunikationsstruktur, d. h. z. B. eine Bus- oder Netzwerkstruktur, an die jeweilige Funktionskomponente 2a - 2i, d. h. insbesondere ein der jeweiligen Funktionskomponente 2a - 2i zugehöriges Steuergerät (nicht gezeigt), übertragen.

Die Steuereinrichtung 7 ist ferner eingerichtet, den wenigstens einen weiteren Betriebsmodus (nur) in Abhängigkeit des Vorliegens einer Bezahlinformation zu aktivieren und dem Betrieb der Funktionskomponente 2a - 2i zugrunde zu legen. Mit anderen Worten ist die Steuereinrichtung 7 eingerichtet, dem Betrieb der wenigstens einen Funktionskomponente 2a - 2i den wenigstens einen weiteren Betriebsparametersatz in Abhängigkeit des Vorliegens einer entsprechenden Bezahlinformation und somit in Abhängigkeit eines durch die Bezahlinformation beschriebenen benutzerseitigen Bezahlvorgangs zugrunde zu legen. Eine Bezahlinformation beschreibt einen wenigstens eine Aktivierung des wenigstens einen weiteren Betriebsmodus betreffenden benutzerseitigen, d. h. benutzerseitig vorgenommenen, Bezahlvorgang. Es ist also möglich, über die Vornahme eines entsprechenden Bezahlvorgangs, welcher durch eine daraufhin, z. B. seitens eines Zahlungsempfängers, erzeugte und an die Steuereinrichtung übertragene Bezahlinformation beschrieben ist, bedarfsweise ("on demand") den Funktions- und Leistungsumfang einer Funktionskomponente 2a - 2i zu erweitern bzw. zu verändern.

Es ist grundsätzlich denkbar, dass mehrere weitere Betriebsmodus bzw. Modi vorgesehen sind. In diesem Fall kann ein erster weiterer Betriebsmodus (zweiter Betriebsmodus) einen Betrieb der Funktionskomponente 2a - 2i mit einem im Vergleich zu dem ersten Betriebsmodus erweiterten Funktions- und/oder Leistungsumfang der Funktionskomponente 2a - 2i gestatten. Ein zweiter weiterer Betriebsmodus (dritter Betriebsmodus) kann einen Betrieb der Funktionskomponente 2a - 2i mit einem im Vergleich zu dem diesem (unmittelbar) vorangehenden weiteren Betriebsmodus (zweiten Betriebsmodus) erweiterten Funktions- und/oder Leistungsumfang der Funktionskomponente 2a - 2i gestatten. Dieses Prinzip kann beliebig fortgesetzt werden. Die Aktivierung eines jeweiligen weiteren Betriebsmodus ist typischerweise mit dem Vorliegen einer entsprechenden Bezahlinformation verknüpft.

Ein Bezahlvorgang kann prinzipiell auf jedwede Weise vorgenommen werden. Der Benutzer kann den Bezahlvorgang etwa an einer räumlich-körperlichen Bezahlstation 9 vornehmen. Eine entsprechende Bezahlstation kann wie in Fig. 1 gezeigt, außerhalb oder innerhalb der Beförderungseinrichtung 1, d. h. insbesondere außerhalb oder innerhalb einer der Beförderungseinrichtung zugehörigen Kabine 4, vorgesehen sein. Denkbar ist es selbstverständlich auch, dass ein Benutzer Bezahlvorgänge über geeignete Software an einen virtuellen Zahlungsempfänger, d. h. z. B. über ein Internet-Zahlungsportal, vornehmen kann. Eine entsprechende Software kann z. B., gegebenenfalls als eigenes Benutzersubmenü, in eine beförderungseinrichtungsseitige Benutzerschnittstelle, wie z. B. eine beförderungseinrichtungsseitige Multimediaeinrichtung (als Beispiel für eine der Funktionskomponenten 2a - 2i) integriert sein. Eine entsprechende Software kann alternativ oder ergänzend z. B. auch als Programm ("App") für ein benutzerseitiges (portables) Endgerät, z. B. ein Notebook, ein Tablet, ein Handy oder ein Smartphone, implementiert sein.

Der für eine Aktivierung des wenigstens einen weiteren Betriebsmodus erforderliche Betrag kann in Abhängigkeit bestimmter Nutzereigenschaften bzw. eines bestimmten Nutzer- bzw. Nutzungsverhaltens variieren. Eine Bezahlinformation kann insofern bestimmte Nutzereigenschaften bzw. ein bestimmtes Nutzer- bzw. Nutzungsverhalten berücksichtigen bzw. auf Grundlage bestimmter Nutzereigenschaften bzw. eines bestimmten Nutzer- bzw. Nutzungsverhaltens erstellt werden.

Eine entsprechende Nutzereigenschaft kann beispielsweise eine, mehrere oder sämtliche die Abnutzung und den Verschleiß der Beförderungseinrichtung 1 beeinflussende bzw. betreffende Eigenschaften, d. h. z. B. das Gewicht, wenigstens eines die Beförderungseinrichtung nutzenden Nutzers betreffen. Entsprechende Eigenschaften eines Nutzers können über geeignete der Beförderungseinrichtung 1 zugehörige, gegebenenfalls in diese integrierte, Erfassungseinrichtungen (nicht gezeigt) erfasst werden. Das Gewicht eines Nutzers kann z. B. durch eine der Beförderungseinrichtung 1 zugehörige, gegebenenfalls in diese integrierte Gewichtserfassungseinrichtung erfasst werden. Entsprechende Erfassungseinrichtungen können mit geeigneten Auswerteeinheiten ausgestattet sein, welche eine Auswertung der Nutzereigenschaften im Hinblick auf für Abnutzung und Verschleiß der Beförderungseinrichtung 1 relevante und nicht bzw. weniger relevante Nutzereigenschaften ermöglicht.

Ein entsprechendes Nutzerverhalten kann eine, mehrere oder sämtliche die Abnutzung und den Verschleiß der Beförderungseinrichtung 1 beeinflussende bzw. betreffende Verhaltensweisen, d. h. z. B. (sprunghafte) Bewegungen, wenigstens eines die Beförderungseinrichtung 1 nutzenden Benutzers betreffen. Entsprechende Verhaltensweisen eines Nutzers können über geeignete der Beförderungseinrichtung 1 zugehörige, gegebenenfalls in diese integrierte, Erfassungseinrichtungen (nicht gezeigt) erfasst werden. Entsprechende Erfassungseinrichtungen können z. B. akustisch, optisch oder mechanisch ausgebildet und mit geeigneten Auswerteeinheiten, d. h. z. B. einer optischen Bewegungserkennung und -auswertung, ausgestattet sein, welche eine Auswertung des Nutzerverhaltens im Hinblick auf für Abnutzung und Verschleiß der Beförderungseinrichtung 1 relevante und nicht bzw. weniger relevante Verhaltensweisen ermöglicht.

Ein entsprechendes Nutzungsverhalten kann eine, mehrere oder sämtliche die Abnutzung und den Verschleiß der Beförderungseinrichtung 1 beeinflussende bzw. betreffende Verhaltensweisen, d. h. z. B. eine typischerweise im Hinblick auf einen bestimmten Referenzwert zu bestimmende weniger häufige oder häufige Nutzung, wenigstens eines die Beförderungseinrichtung 1 nutzenden Benutzers betreffen. Das Nutzungsverhalten eines Nutzers kann über geeignete der Beförderungseinrichtung 1 zugehörige, gegebenenfalls in diese integrierte Erfassungseinrichtungen (nicht gezeigt) erfasst werden. Entsprechende Erfassungseinrichtungen können z. B. akustisch oder optisch ausgebildet und mit geeigneten Auswerteeinheiten, d. h. z. B. einer akustischen oder optischen Nutzererkennung, ausgestattet sein, welche eine Auswertung des Nutzungsverhaltens im Hinblick auf für Abnutzung und Verschleiß der Beförderungseinrichtung 1 relevante und nicht bzw. weniger relevante Häufigkeit der Nutzung ermöglicht.

Wesentlich ist in allen Fällen, dass der eigentliche Bezahlvorgang nicht Bestandteil der Erfindung ist.

Durch die Möglichkeit, beförderungseinrichtungsseitige Funktionskomponenten 2a - 2i in wenigstens zwei unterschiedlichen Betriebsmodi bzw. Modi zu betreiben, ist eine einfache und zufriedenstellende Lösung zur Realisierung einer Abstufung der Beförderungseinrichtungen 1 in unterschiedliche Beförderungseinrichtungsklassen bzw. -baureihen gegeben. Dies kann dadurch realisiert sein, dass bei höheren Beförderungseinrichtungsklassen bzw. -baureihen hersteller- bzw. werksseitig bereits (mehrere) Funktionskomponenten 2a - 2i mit einem im Vergleich erweiterten Funktions- bzw. Leistungsumfang aktiviert bzw. freigeschaltet sein können als bei niedrigeren Beförderungseinrichtungsklassen bzw. -baureihen.

Eine Funktionskomponente 2a kann ein einen Teil einer beförderungseinrichtungsseitigen Antriebseinrichtung 10 bildendes Antriebsaggregat sein oder ein solches umfassen. Ein Antriebsaggregat kann z. B. ein elektrischer oder hydraulischer Antrieb sein. Ein Antriebsaggregat kann wenigstens einen Antriebsmotor umfassen. Ein Betriebsparameter kann jedweder den Betrieb, insbesondere die Leistung und/oder den Energieverbrauch, des Antriebsaggregats beeinflussender Parameter sein. Beispielsweise kann das Antriebsaggregat in dem ersten Betriebsmodus mit einer ersten Leistung(saufnahme) und/oder einem ersten Energieverbrauch und in dem weiteren Betriebsmodus mit einer im Vergleich höheren zweiten Leistung(saufnahme) und/oder einem im Vergleich geringeren weiteren Energieverbrauch betrieben werden. Konkret kann dies bedeuten, dass eine Bewegung der Kabine 4 in dem zweiten Betriebsmodus, d. h. z. B. aufgrund einer im Vergleich höheren zweiten Leistung(saufnahme) des Antriebsaggregats, schneller erfolgen kann als in dem ersten Betriebsmodus.

Eine Funktionskomponente 2b kann auch eine Steuereinrichtung 11 zur Steuerung der Bewegung der Kabine 4 entlang des Fahrwegs, insbesondere zur Steuerung von Unterbrechungen einer Bewegung der Kabine 4, insbesondere durch wenigstens einen Zwischenhalt, zwischen einem benutzerseitig vorgebbaren oder vorgegebenen Fahrweganfangspunkt und einem benutzerseitig vorgebbaren oder vorgegebenen Fahrweganfangspunkt, sein oder eine solche umfassen. Die Steuereinrichtung 11 kann eingerichtet sein, eine Bewegung der Kabine 4 entlang eines durch einen benutzerseitig vorgebbaren oder vorgegebenen Fahrweganfangspunkt und einen benutzerseitig vorgebbaren oder vorgegebenen Fahrweganfangspunkt benutzerseitig vorgebbaren oder vorgegebenen Fahrweg in dem ersten Betriebsmodus mit einer ersten Anzahl an, z. B. durch das Zusteigen von Benutzern in die Kabine 4 bedingten, Unterbrechungen zu steuern und eine Bewegung der Kabine 4 entlang des Fahrwegs in einem zweiten Betriebsmodus mit einer anderen, d. h. insbesondere geringeren, Anzahl an Unterbrechungen zu steuern. Für das in Fig. 1 gezeigten Ausführungsbeispiel eines Personenaufzugs und einem beispielhaften Fahrweg zwischen einer ersten und einer zwölften Etage kann die Kabine 4 in dem zweiten Betriebsmodus sonach ohne Zwischenhalt zwischen der ersten und der zwölften Etage bewegt werden. Selbstverständlich kann die Kabine 4 in dem zweiten Betriebsmodus auch ohne Unterbrechungen entlang eines durch einen benutzerseitig vorgebbaren oder vorgegebenen Fahrweganfangspunkt und einen benutzerseitig vorgebbaren oder vorgegebenen Fahrweganfangspunkt benutzerseitig vorgebbaren oder vorgegebenen Fahrweg bewegt werden.

Eine Funktionskomponente 2c kann auch eine einer Zugangsmöglichkeit bzw. -öffnung 12 in die Kabine 4 zugeordnete Schließeinrichtung 13, welche wenigstens ein zwischen einer Offenstellung, in welcher ein Zutritt eines Benutzers in die Kabine 4 durch die Zugangsmöglichkeit möglich ist, und einer Schließposition, in welcher kein Zutritt eines Benutzers in die Kabine 4 durch die Zugangsmöglichkeit möglich ist, bewegbares, insbesondere türartiges- oder -förmiges, Schließelement 14 (Aufzugtür) umfasst, sein oder eine solche umfassen. Insbesondere kann die Funktionskomponente 2c eine einer entsprechenden Schließeinrichtung 13 zugehörige Steuereinrichtung (nicht gezeigt) zur Steuerung von Bewegungen des wenigstens einen Schließelements 14, insbesondere zwischen der Offen- und der Schließposition, sein oder eine solche umfassen. Die Steuereinrichtung 14 kann z. B. eingerichtet sein, dem Betrieb der Schließeinrichtung 13 in einem ersten Betriebsmodus einen ersten Betriebsparameter(satz) und in dem zweiten Betriebsmodus einen zweiten Betriebsparameter(satz) zugrunde zu legen. Über einen entsprechenden ersten und zweiten Betriebsparameter(satz) können diverse Betriebsparameter der Schließeinrichtung 13, d. h. z. B. die Bewegungsgeschwindigkeit des Schließelements 14, insbesondere zwischen der Offen- und der Schließposition, die Öffnungszeit des in die Offenposition bewegten Schließelements 14, bevor dieses in die Schließposition bewegt wird, etc., gesteuert werden; mithin ist es z. B. möglich, dass das Schließelement 14 in dem ersten Betriebsmodus mit einer ersten Bewegungsgeschwindigkeit und in dem zweiten Betriebsmodus mit einer zweiten, d. h. im Vergleich niedrigeren oder höheren, Bewegungsgeschwindigkeit bewegt wird und/oder das Schließelement 14 in dem ersten Betriebsmodus eine erste Öffnungsweit und in dem zweiten Betriebsmodus eine zweite, d. h. im Vergleich niedrigere oder höhere Öffnungszeit, bevor es ausgehend von der Offenposition in die Schließposition bewegt wird, aufweist.

Eine Funktionskomponente 2d kann auch eine zur Ausgabe von Signalen in wenigstens einen Teil der Kabine 4 zur Aufnahme eingerichtete Signalausgabeeinrichtung 15, insbesondere als Bestandteil einer beförderungseinrichtungsseitigen Multimediaeinrichtung (nicht gezeigt), sein oder eine solche umfassen. Eine entsprechende Signalausgabeeinrichtung 15 kann z. B. eine Audio- und/oder Videoanlage sein. Ein Betriebsparameter kann jedweder den Betrieb, insbesondere den Funktions- und/oder Leistungsumfang, der Signalausgabeeinrichtung 15 beeinflussender Parameter sein. Beispielsweise kann die Signalausgabeeinrichtung 15 in dem ersten Betriebsmodus, sofern die Signalausgabeeinrichtung 15 in diesem überhaupt in Betrieb genommen werden kann, zur Ausgabe von Signalen einer ersten Qualität, d. h. z. B. zur Ausgabe von Stereosignalen, und/oder zum Empfang von analog empfangbaren Radio- und/oder TV-Sendern und in dem weiteren Betriebsmodus z. B. zur Ausgabe von Signalen einer im Vergleich höheren zweiten Qualität, d. h. z. B. zur Ausgabe von Surroundsignalen, und/oder zum Empfang von digital empfangbaren Radio- und/oder TV-Sendern eingerichtet sein.

Eine Funktionskomponente 2e kann auch eine zur Steuerung der klimatischen Verhältnisse in wenigstens einem Teil der Kabine 4 eingerichtete Klimaeinrichtung 16 sein oder eine solche umfassen. Eine entsprechende Klimaeinrichtung 16 kann z. B. eine Klimatisierungs- oder eine Heizungseinrichtung sein. Ein Betriebsparameter kann jedweder den Betrieb, insbesondere den Funktions- und/oder Leistungsumfang, der Klimaeinrichtung 16 beeinflussender Parameter sein. Beispielsweise kann die Klimaeinrichtung 16 in dem ersten Betriebsmodus, sofern die Klimaeinrichtung 16 in diesem überhaupt in Betrieb genommen werden kann, mit einer ersten Leistung(saufnahme) und/oder einem ersten Energieverbrauch und in dem weiteren Betriebsmodus mit einer im Vergleich höheren zweiten Leistung(saufnahme) und/oder einem im Vergleich geringeren zweiten Energieverbrauch betrieben werden.

Eine Funktionskomponente 2f kann auch eine zur, insbesondere funkbasierten, Kommunikation mit einem Kommunikationspartner eingerichtete beförderungseinrichtungsseitige Kommunikationseinrichtung 17 sein oder eine solche umfassen. Eine entsprechende Kommunikationseinrichtung 17 kann z. B. ein eine Funkverbindung, z. B. eine Bluetooth- oder WLAN-Verbindung, mit einem Kommunikationspartner, d. h. z. B. einem portablen Endgerät (nicht gezeigt), insbesondere einem Tablet-PC, einem Handy oder einem Smartphone, ermöglichendes Kommunikationsmodul sein. Ein entsprechendes Kommunikationsmodul kann im Weiteren - z. B. in Form eines Netzwerk-Hubs - eingerichtet sein, eine Kommunikationsverbindung mit einem Kommunikationsnetzwerk, d. h. z. B. einem Intranet oder dem Internet, herzustellen. Ein Betriebsparameter kann jedweder den Betrieb, insbesondere den Funktions- und/oder Leistungsumfang, der Kommunikationseinrichtung 17 beeinflussender Parameter sein. Beispielsweise kann die Kommunikationseinrichtung 17 in dem ersten Betriebsmodus, sofern die Kommunikationseinrichtung 17 in diesem überhaupt in Betrieb genommen werden kann, mit einer ersten Leistung (Funkleistung) bzw. einem ersten Sende- und Empfangsbereich und/oder einem ersten Funkstandard, z. B. einem Bluetooth-Standard, und in dem weiteren Betriebsmodus mit einer im Vergleich höheren Leistung bzw. einem im Vergleich größeren Sende- und Empfangsbereich und/oder einem bestimmten, gegebenenfalls zusätzlichen, Funkstandard, z. B. einem Bluetooth- oder WLAN-Standard, betrieben werden.

Eine Funktionskomponente 2g kann auch eine zur Ausgabe von Fahrweginformationen eingerichtete Navigationseinrichtung 18 sein oder eine solche umfassen. Eine entsprechende Navigationseinrichtung 18 kann z. B. ein eine Anzeige diverser den Fahrweg betreffender Informationen, d. h. z. B. Gesamtfahrweglänge, Gesamtfahrzeit, Restfahrweglänge, Restfahrzeit, etc., ausgebendendes Navigationsgerät sein. Ein Betriebsparameter kann jedweder den Betrieb, insbesondere den Funktions- und/oder Leistungsumfang, der Navigationseinrichtung 18 beeinflussender Parameter sein. Beispielsweise kann die Navigationseinrichtung 18 in dem ersten Betriebsmodus, sofern die Navigationseinrichtung 18 in diesem überhaupt in Betrieb genommen werden kann, Fahrweginformationen mit einem bestimmten Informationsgehalt ausgeben und in dem weiteren Betriebsmodus Fahrweginformationen mit einem im Vergleich, z. B. hinsichtlich des Umfangs und/oder des Detaillierungsgrads, erweiterten Informationsgehalt ausgeben.

Eine Funktionskomponente 2h kann auch eine zur Bereitstellung einer bestimmten Anzahl und/oder Anordnung von Sitzplätzen innerhalb wenigstens eines Teils der Kabine 4 eingerichtete Sitzplatzeinrichtung 19 sein oder eine solche umfassen. Eine solche Sitzplatzeinrichtung 19 kann z. B. eine Sitzbewegungseinrichtung (nicht gezeigt), welche zur Bewegung wenigstens eines Sitzes (nicht gezeigt) zwischen einer Nutzstellung, in welcher der Sitz von einem Benutzer als Sitz genutzt werden kann, und einer Verstaustellung, in welcher der Sitz verstaut ist und von einem Benutzer nicht als Sitz genutzt werden kann, sein. Ein Betriebsparameter kann jedweder den Betrieb, insbesondere den Funktions- und/oder Leistungsumfang, der Sitzplatzeinrichtung 19 beeinflussender Parameter sein. Beispielsweise kann die Sitzplatzeinrichtung 19 in dem ersten Betriebsmodus gesperrt sein, d. h. die Bewegung eines Sitzes im Allgemeinen zwischen einer Nutz- und einer Verstaustellung, im Besonderen ausgehend von einer Verstaustellung in eine Nutzstellung, ist nicht möglich, und in dem weiteren Betriebsmodus nicht gesperrt sein, d. h. die Bewegung eines Sitzes zwischen einer Nutz- und einer Verstaustellung ist möglich.

Eine Funktionskomponente 2i kann auch eine wenigstens einer Aussichtsmöglichkeit bzw. - öffnung 20, hierbei kann es sich z. B. um ein Sichtfenster handeln, aus der Kabine 4 zugeordnete Schließeinrichtung 21, welche wenigstens ein zwischen einer Offenstellung, in welcher eine Aussicht eines Benutzers aus der Kabine 4 durch die Aussichtsmöglichkeit möglich ist, und einer Schließposition, in welcher keine Aussicht eines Benutzers aus der Kabine 4 durch die Aussichtsmöglichkeit möglich ist, bewegbares, insbesondere schieberartiges- oder -förmiges, Schließelement 22 umfasst, sein oder eine solche umfassen. Insbesondere kann die Funktionskomponente 2i eine einer entsprechenden Schließeinrichtung 21 zugehörige Steuereinrichtung (nicht gezeigt) zur Steuerung von Bewegungen des Schließelements 22, insbesondere zwischen der Offen- und der Schließposition, sein oder eine solche umfassen. Die Steuereinrichtung kann z. B. eingerichtet sein, in dem ersten Betriebsmodus keine Bewegung des Schließelements 22 von der Schließ- in die Offenposition zu ermöglichen - hierunter kann gegebenenfalls auch eine begrenzte Bewegung des Schließelements 22 in Richtung der Offenposition zu verstehen sein, welche noch keine vollständige Aussicht aus der Kabine 4 durch die Aussichtsmöglichkeit zulässt - zu ermöglichen und in dem zweiten Betriebsmodus eine Bewegung des Schließelements 22 von der Schließ- in die Offenposition, welche eine vollstände Aussicht aus der Kabine 4 durch die Aussichtsmöglichkeit bzw. -öffnung zulässt - zu ermöglichen. Auch ist es möglich, dass eine entsprechende Steuereinrichtung eingerichtet ist, dem Betrieb der Schließeinrichtung 21 in einem ersten Betriebsmodus einen ersten Betriebsparameter(satz) und in dem zweiten Betriebsmodus einen zweiten Betriebsparameter(satz) zugrunde zu legen. Über einen entsprechenden ersten und zweiten Betriebsparameter(satz) können diverse Betriebsparameter der Schließeinrichtung 21, d. h. z. B. die Bewegungsgeschwindigkeit des Schließelements 22, insbesondere zwischen der Offen- und der Schließposition, die Öffnungszeit des in die Offenposition bewegten Schließelements 22, bevor dieses in die Schließposition bewegt wird, etc., gesteuert werden; mithin ist es z. B. möglich, dass ein Schließelement 22 in dem ersten Betriebsmodus mit einer ersten Bewegungsgeschwindigkeit und in dem zweiten Betriebsmodus mit einer zweiten, d. h. im Vergleich niedrigeren oder höheren, Bewegungsgeschwindigkeit bewegt wird und/oder ein Schließelement 22 in dem ersten Betriebsmodus eine erste Öffnungsweit und in dem zweiten Betriebsmodus eine zweite, d. h. im Vergleich z. B. höhere Öffnungszeit, bevor es ausgehend von der Offenposition in die Schließposition bewegt wird, aufweist.

Fig. 2 zeigt eine Prinzipdarstellung einer Beförderungseinrichtung 1 gemäß einem weiteren Ausführungsbeispiel. Im Unterschied zu dem in Fig. 1 gezeigten Ausführungsbeispiel ist die Beförderungseinrichtung 1 hier nicht als Aufzug, sondern als Fahrsteig, wie er grundsätzlich z. B. von Flughäfen bekannt ist, ausgebildet. Der Fahrsteig umfasst ein den Fahrweg definierendes Förderband 23 für einen Benutzer 2 und/oder Gegenstand. Analoges gilt für das Ausführungsbeispiel einer Beförderungseinrichtung 1 in Form einer Rolltreppe.

Als beispielhafte Funktionskomponente 2a ist 10 ein einen Teil einer beförderungseinrichtungsseitigen Antriebseinrichtung 10 bildendes Antriebsaggregat dargestellt, welches in dem ersten Betriebsmodus mit einer ersten Leistung(saufnahme) und/oder einem ersten Energieverbrauch und in dem weiteren Betriebsmodus mit einer im Vergleich höheren zweiten Leistung(saufnahme) und/oder einem im Vergleich geringeren weiteren Energieverbrauch betrieben werden. Konkret kann dies bedeuten, dass eine Bewegung des Förderbands 23 in dem zweiten Betriebsmodus, d. h. z. B. aufgrund einer im Vergleich höheren zweiten Leistung(saufnahme) des Antriebsaggregats, schneller erfolgen kann als in dem ersten Betriebsmodus.

Selbstverständlich kann die Beförderungseinrichtung 1 andere oder weitere Funktionskomponenten umfassen; die Ausführungen im Zusammenhang mit dem in Fig. 1 gezeigten Aufzug gelten analog.

Für alle Ausführungsbeispiele gilt, dass die Steuereinrichtung 7 eingerichtet sein kann, den Betrieb der wenigstens einen Funktionskomponente 2a - 2i auf Grundlage des wenigstens einen weiteren Betriebsmodus nach dessen Aktivierung in Abhängigkeit des Vorliegens einer wenigstens eine benutzerseitige Freigabe des aktivierten Betriebsmodus beschreibenden Freigabeinformation zu steuern. Die Aktivierung eines weiteren Betriebsmodus kann sonach (nur) eine grundsätzliche Bereitstellung des in dem jeweiligen weiteren Betriebsmodus gegebenen erweiterten Funktions- bzw. Leistungsumfangs der jeweiligen Funktionskomponente 2a - 2i darstellen. Die tatsächliche Nutzung des erweiterten Funktions- bzw. Leistungsumfangs der jeweiligen Funktionskomponente 2a - 2i kann an eine durch eine entsprechende Freigabeinformation beschriebene benutzerseitige Freigabe geknüpft sein. Eine benutzerseitige Freigabe kann z. B. durch wenigstens eine benutzerseitige Bedienhandlung, wie z. B. die Betätigung eines, z. B. beförderungseinrichtungsseitigen, Betätigungselements und/oder die Gabe eines Sprachbefehls, erfolgen. Eine entsprechende benutzerseitige Bedienhandlung kann auch über ein benutzerseitiges (portables) Endgerät gegeben und über eine geeignete, insbesondere drahtlose, Kommunikationsverbindung an die Beförderungseinrichtung 1 übertragen werden.

Für alle Ausführungsbeispiele gilt ferner, dass die Steuereinrichtung eingerichtet sein kann, die Aktivierung des wenigstens einen weiteren Betriebsmodus in Abhängigkeit einer wenigstens ein Zeitkriterium beschreibenden Zeitinformation und/oder in Abhängigkeit einer wenigstens ein Streckenkriterium beschreibenden Streckeninformation und/oder in Abhängigkeit einer wenigstens ein Klimakriterium beschreibenden Klimainformation und/oder in Abhängigkeit einer wenigstens ein Verschmutzungskriterium beschreibenden Verschmutzungsinformation aufzuheben. Die Aktivierung eines jeweiligen weiteren Betriebsmodus kann sonach im Hinblick auf bestimmte, durch jeweilige Informationen beschriebene Kriterien beschränkt sein. Die Aktivierung eines jeweiligen weiteren Betriebsmodus bedeutet sonach nicht zwingend eine (zeitlich) unbeschränkte Freischaltung des jeweiligen Betriebsmodus.

Das Zeitkriterium kann eine bestimmte, insbesondere von einer Uhrzeit und/oder einem Datum unabhängige, Zeitdauer, d. h. z. B. eine Zeitdauer von 15 Minuten, 1 Stunde, 2 Tage, 3 Monate, 1 Jahr, etc. sein. Ein Zeitkriterium kann jedoch auch ein bestimmter, insbesondere von einer Uhrzeit und/oder einem Datum abhängiger, Zeitraum zwischen einem, insbesondere benutzerseitig, vorgebbaren bzw. vorgegebenen Anfangszeitpunkt und einem, insbesondere benutzerseitig, vorgebbaren bzw. vorgegebenen Endzeitpunkt, d. h. z. B. ein bestimmter Zeitraum innerhalb eines Tages, ein Zeitraum eines oder mehrerer Tage, insbesondere innerhalb einer (bestimmten) Woche, ein Zeitraum eines oder mehrerer Monate, insbesondere innerhalb einer (bestimmten) Jahreszeit, oder ein Zeitraum eines oder mehrerer Jahre sein.

Das Streckenkriterium kann eine bestimmte, insbesondere von einem bestimmten Anfangspunkt (hierbei muss es sich nicht zwingend um einen absoluten Fahrweganfangspunkt handeln) und einem bestimmten Endpunkt (hierbei muss es sich nicht zwingend um einen absoluten Fahrwegendpunkt handeln) unabhängige, Streckenlänge, d. h. z. B. eine Streckenlänge bzw. Höhendifferenz von 100 m, sein. Ein Streckenkriterium kann jedoch auch eine bestimmte, insbesondere von einem bestimmten Fahrweganfangspunkt und einem bestimmten Fahrwegendpunkt abhängige, Strecke zwischen einem, insbesondere benutzerseitig, vorgebbaren bzw. vorgegebenen Fahrweganfangspunkt und einem, insbesondere benutzerseitig, vorgebbaren bzw. vorgegebenen Fahrwegendpunkt, wie z. B. für das Beispiel einer Beförderungseinrichtung in Form eines in einem Hochhaus verbauten Personenaufzugs ein (bestimmter) Fahrweg z. B. von der ersten Etage in die zwölfte Etage, sein.

Das Klimakriterium kann ein das Klima außerhalb und/oder einer beförderungseinrichtungsseitigen Kabine 4 betreffender Klimaparameter, insbesondere eine Feuchtigkeit, ein Druck, eine Temperatur, außerhalb und/oder innerhalb der Kabine 4 sein. Das Über- oder Unterschreiten z. B. einer bestimmten Temperatur kann sonach eine Aufhebung des weiteren Betriebsmodus bedingen. Beispielsweise kann eine Klimaeinrichtung (zur Beheizung oder Kühlung des Kabineninnenraums 3) bei Unterschreiten einer bestimmten Grenztemperatur deaktiviert werden.

Das Verschmutzungskriterium kann ein die Verschmutzung außerhalb und/oder innerhalb einer beförderungseinrichtungsseitigen Kabine 4 betreffender Verschmutzungsparameter, d. h. insbesondere die chemische Zusammensetzung der Luft, das Vorhandensein bzw. die Konzentration bestimmter chemischer Substanzen und/oder Partikel, insbesondere Feinstaub oder Pollen, etc., außerhalb und/oder innerhalb der Kabine 4 sein.

Jeweilige Kriterien können in Abhängigkeit der Bezahlinformation variabel sein bzw. variiert werden. Ein Benutzer kann durch einen durch eine entsprechende Bezahlinformation beschriebenen Bezahlvorgang sonach Einfluss auf die durch das jeweilige Kriterium mitbestimmte Aufhebung des Betriebs einer Funktionskomponente 2a - 2i in dem weiteren Betriebsmodus nehmen. Beispielsweise kann durch eine Bezahlinformation, welche beschreibt, dass der Benutzer eine höhere Summe gezahlt oder eine erneute Zahlung getätigt hat, das Streckenkriterium beeinflussen, sodass der Betrieb der Funktionskomponente 2a - 2i in dem weiteren Betriebsmodus z. B. nicht nur für eine Strecke bzw. Höhendifferenz von z. B. 100 m, sondern für eine Strecke bzw. Höhendifferenz von 200 m möglich ist.

Für alle Ausführungsbeispiele gilt ferner, dass die oder eine weitere Steuereinrichtung 7 dazu eingerichtet sein kann, eine eine Empfehlung einer Aktivierung eines weiteren Betriebsmodus im Hinblick auf eine bestimmte Zielgröße beschreibenden Empfehlungsinformation zu erzeugen und, insbesondere über wenigstens eine beförderungseinrichtungsseitige Signalausgabeeinrichtung z. B. in Form akustischer, optischer und/oder haptischer Signale, an einen Benutzer 2 auszugeben. Eine Zielgröße kann z. B. eine möglichst effiziente Bewegung einer beförderungseinrichtungsseitigen Kabine 4 zwischen einem (benutzerseitig vorgebbaren oder vorgegebenen) Fahrweganfangspunkt und einem (benutzerseitig vorgebbaren oder vorgegebenen) Fahrwegendpunkt sein, welche z. B. einen Zwischenhalt an zwischen dem Fahrweganfangspunkt und dem Fahrwegendpunkt liegenden Positionen unterbindet. Für das Beispiel eines Aufzugs, d. h. z. B. eines Personenaufzugs, und einem beispielhaften Fahrweg zwischen einer ersten und einer zwölften Etage kann eine Empfehlungsinformation sonach z. B. empfehlen, einen weiteren Betriebsmodus zu aktivieren, um Zwischenhalte zwischen einer ersten und einer zwölften Etage unterbinden.

Mit den in den Fig. gezeigten Ausführungsbeispielen einer Beförderungseinrichtung lässt sich ein Verfahren zum Betrieb einer wie Beförderungseinrichtung 1 implementieren. Die verfahrensgemäß betriebene Beförderungseinrichtung 1 umfasst wenigstens eine Funktionskomponente 2a - 2i, welche einen ersten Betriebsmodus, in welchem der Betrieb der Funktionskomponente gesperrt ist oder dem Betrieb der Funktionskomponente 2a - 2i ein wenigstens einen ersten Betriebsparameter umfassender erster Betriebsparametersatz zugrunde gelegt wird, und wenigstens einen weiteren Betriebsmodus, in welchem der Betrieb der Funktionskomponente nicht gesperrt ist oder dem Betrieb der Funktionskomponente 2a - 2i ein wenigstens einen von dem ersten Betriebsparameter unterschiedlichen weiteren Betriebsparameter umfassender weiterer Betriebsparametersatz zugrunde gelegt wird, aufweist. Der wenigstens einen Funktionskomponente 2a - 2i ist wenigstens eine Steuereinrichtung, welche zur Aktivierung des ersten oder des wenigstens einen weiteren Betriebsmodus und zur Steuerung des Betriebs der Funktionskomponente 2a - 2i auf Grundlage des jeweils aktivierten Betriebsmodus eingerichtet ist, zuordenbar oder zugeordnet. Die Steuereinrichtung 7 kann den wenigstens einen weiteren Betriebsmodus in Abhängigkeit des Vorliegens einer wenigstens einen eine Aktivierung des wenigstens einen weiteren Betriebsmodus betreffenden benutzerseitigen Bezahlvorgang beschreibenden Bezahlinformation aktivieren und der Steuerung des Betriebs der wenigstens einen Funktionskomponente 2a - 2i den wenigstens einen weiteren Betriebsparametersatz zugrunde legen.

## Patentansprüche

1. Beförderungseinrichtung (1) zur Beförderung von Personen und/oder Gegenständen entlang eines zwischen einem Fahrweganfangspunkt und einem Fahrwegendpunkt definierten Fahrwegs, umfassend:
wenigstens eine Funktionskomponente (2a - 2i), welche einen ersten Betriebsmodus, in welchem der Betrieb der Funktionskomponente (2a - 2i) gesperrt ist oder dem Betrieb der Funktionskomponente (2a - 2i) ein wenigstens einen ersten Betriebsparameter umfassender erster Betriebsparametersatz zugrunde gelegt ist, und
wenigstens einen weiteren Betriebsmodus, in welchem der Betrieb der Funktionskomponente (2a - 2i) nicht gesperrt ist oder dem Betrieb der Funktionskomponente (2a - 2i) ein wenigstens einen von dem ersten Betriebsparameter unterschiedlichen weiteren Betriebsparameter umfassender weiterer Betriebsparametersatz zugrunde gelegt ist, aufweist,
eine der wenigstens einen Funktionskomponente (2a - 2i) zuordenbare oder zugeordnete Steuereinrichtung (7), welche eingerichtet ist, den ersten oder den wenigstens einen weiteren Betriebsmodus zu aktivieren und den Betrieb der wenigstens einen Funktionskomponente (2a - 2i) auf Grundlage des jeweils aktivierten Betriebsmodus zu steuern,
wobei die Steuereinrichtung (7) ferner eingerichtet ist, den wenigstens einen weiteren Betriebsmodus in Abhängigkeit des Vorliegens einer wenigstens einen eine Aktivierung des wenigstens einen weiteren Betriebsmodus betreffenden benutzerseitigen Bezahlvorgang beschreibenden Bezahlinformation zu aktivieren und der Steuerung des Betriebs der wenigstens einen Funktionskomponente (2a - 2i) den wenigstens einen weiteren Betriebsparametersatz zugrunde zu legen,
**dadurch gekennzeichnet, dass**
über die Vornahme eines entsprechenden Bezahlvorgangs, welcher durch eine daraufhin erzeugte und an die Steuereinrichtung (7) übertragene Bezahlinformation beschrieben ist, bedarfsweise der Funktions- und Leistungsumfang einer Funktionskomponente (2a - 2i) erweiterbar ist.

2. Beförderungseinrichtung nach Anspruch 1, **dadurch gekennzeichnet, dass** der wenigstens eine weitere Betriebsmodus einen Betrieb der Funktionskomponente (2a - 2i) mit einem im Vergleich zu dem ersten Betriebsmodus erweiterten Funktions- und/oder Leistungsumfang der Funktionskomponente (2a - 2i) gestattet.

3. Beförderungseinrichtung nach Anspruch 1 oder 2, **gekennzeichnet durch** mehrere weitere Betriebsmodi, wobei ein erster weiterer Betriebsmodus einen Betrieb der Funktionskomponente (2a - 2i) mit einem im Vergleich zu dem ersten Betriebsmodus erweiterten Funktions- und/oder Leistungsumfang der Funktionskomponente (2a - 2i) gestattet und ein zweiter weiterer Betriebsmodus einen Betrieb der Funktionskomponente (2a - 2i) mit einem im Vergleich zu dem diesem vorangehenden weiteren Betriebsmodus erweiterten Funktions- und/oder Leistungsumfang der Funktionskomponente (2a - 2i) gestattet.

4. Beförderungseinrichtung nach einem der vorhergehenden Ansprüche, **dadurch gekennzeichnet, dass** die Steuereinrichtung (7) eingerichtet ist, die Aktivierung des wenigstens einen weiteren Betriebsmodus in Abhängigkeit einer wenigstens ein Zeitkriterium beschreibenden Zeitinformation und/oder in Abhängigkeit einer wenigstens ein Fahrwegkriterium beschreibenden Fahrweginformation und/oder in Abhängigkeit einer wenigstens ein Klimakriterium beschreibenden Klimainformation und/oder in Abhängigkeit einer wenigstens ein Verschmutzungskriterium beschreibenden Verschmutzungsinformation aufzuheben.

5. Beförderungseinrichtung nach Anspruch 4, **dadurch gekennzeichnet, dass** das Zeitkriterium eine bestimmte, insbesondere von einer Uhrzeit und/oder einem Datum unabhängige, Zeitdauer oder ein bestimmter, insbesondere von einer Uhrzeit und/oder einem Datum abhängiger, Zeitraum zwischen einem vorgebbaren oder vorgegebenen Anfangszeitpunkt und einem vorgebbaren oder vorgegebenen Endzeitpunkt ist,
das Fahrwegkriterium eine bestimmte, insbesondere von einem bestimmten Fahrweganfangspunkt und einem bestimmten Fahrwegendpunkt unabhängige, Fahrweglänge oder eine bestimmte, insbesondere von einem bestimmten Fahrweganfangspunkt und einem bestimmten Fahrwegendpunkt abhängiger Fahrweg zwischen einem vorgebbaren oder vorgegebenen Fahrweganfangspunkt und einem vorgebbaren oder vorgegebenen Fahrwegendpunkt ist,
das Klimakriterium ein das Klima außerhalb und/oder innerhalb der Personenbeförderungseinrichtung (1) betreffender Klimaparameter, insbesondere eine Feuchtigkeit, ein Druck, eine Temperatur, außerhalb und/oder innerhalb der Personenbeförderungseinrichtung (1), ist,
das Verschmutzungskriterium ein die Verschmutzung außerhalb und/oder innerhalb der Personenbeförderungseinrichtung (1) betreffender Verschmutzungsparameter, insbesondere die chemische Zusammensetzung der Luft, das Vorhandensein und/oder die Konzentration bestimmter chemischer Substanzen und/oder Partikel, insbesondere Feinstaub oder Pollen, außerhalb und/oder innerhalb der Personenbeförderungseinrichtung (1), ist.

6. Beförderungseinrichtung nach Anspruch 4 oder 5, **dadurch gekennzeichnet, dass** das Zeitkriterium und/oder das Fahrwegkriterium und/oder das Klimakriterium und/oder das Verschmutzungskriterium in Abhängigkeit der den wenigstens einen weiteren Betriebsmodus betreffenden benutzerseitigen Bezahlvorgang beschreibenden Bezahlinformation variabel ist.

7. Beförderungseinrichtung nach einem der vorhergehenden Ansprüche, **dadurch gekennzeichnet, dass**
- die Funktionskomponente (2a) ein einen Teil einer personenbeförderungseinrichtungsseitigen Antriebseinrichtung (10) bildendes Antriebsaggregat ist oder ein solches umfasst, oder
- die Funktionskomponente (2b) eine Steuereinrichtung (11) zur Steuerung der Bewegung einer personenbeförderungseinrichtungsseitigen Kabine (4) entlang des Fahrwegs, insbesondere zur Steuerung von Unterbrechungen der Bewegung, insbesondere durch wenigstens einen Zwischenhalt, der personenbeförderungseinrichtungsseitigen Kabine (4) zwischen einem benutzerseitig vorgebbaren oder vorgegebenen Fahrweganfangspunkt und einem benutzerseitig vorgebbaren oder vorgegebenen Fahrweganfangspunkt, ist oder eine solche umfasst, oder
- die Funktionskomponente (2c) eine einer Zugangsmöglichkeit in eine personenbeförderungseinrichtungsseitige Kabine (4) zugeordnete Schließeinrichtung (13), welche wenigstens ein zwischen einer Offen- und einer Schließposition bewegbares, insbesondere türartiges- oder -förmiges, Schließelement (14) umfasst, ist oder eine solche umfasst, oder
- die Funktionskomponente (2d) eine zur Ausgabe von Signalen in wenigstens einen Teil einer personenbeförderungseinrichtungsseitigen Kabine (4) eingerichtete Signalausgabeeinrichtung (15), insbesondere als Bestandteil einer personenbeförderungseinrichtungsseitigen Multimediaeinrichtung, ist oder eine solche umfasst, oder
- die Funktionskomponente (2e) eine zur Steuerung der klimatischen Verhältnisse in wenigstens einem Teil einer personenbeförderungseinrichtungsseitigen Kabine (4) eingerichtete Klimaeinrichtung (16) ist oder eine solche umfasst, oder
- die Funktionskomponente (2f) eine zur, insbesondere funkbasierten, Kommunikation mit einem Kommunikationspartner eingerichtete Kommunikationseinrichtung (17) ist oder eine solche umfasst, oder
- die Funktionskomponente (2g) eine zur Ausgabe von den Fahrweg betreffenden Fahrweginformationen eingerichtete Navigationseinrichtung (18) ist oder eine solche umfasst,
- die Funktionskomponente (2h) eine zur Bereitstellung einer bestimmten Anzahl und/oder Anordnung von Sitzplätzen innerhalb wenigstens eines Teils einer personenbeförderungseinrichtungsseitigen Kabine (4) eingerichtete Sitzplatzeinrichtung (19) ist oder eine solche umfasst, oder
- die Funktionskomponente (2i) eine zur Freigabe eines eine Aussicht aus der personenbeförderungseinrichtungsseitigen Kabine (4) ermöglichenden Sichtfensters eingerichtete Sichtfensterfreigabeeinrichtung (20) ist oder eine solche umfasst.

8. Beförderungseinrichtung nach einem der vorhergehenden Ansprüche, **dadurch gekennzeichnet, dass** die Steuereinrichtung (7) eingerichtet ist, den Betrieb der wenigstens einen Funktionskomponente (2a - 2i) auf Grundlage des wenigstens einen weiteren Betriebsmodus nach dessen Aktivierung in Abhängigkeit des Vorliegens einer wenigstens eine benutzerseitige Freigabe des aktivierten Betriebsmodus beschreibenden Freigabeinformation zu steuern.

9. Beförderungseinrichtung nach einem der vorhergehenden Ansprüche, **dadurch gekennzeichnet, dass** die oder eine weitere Steuereinrichtung (7) dazu eingerichtet ist, eine eine Empfehlung einer Aktivierung eines weiteren Betriebsmodus im Hinblick auf eine bestimmte, insbesondere den Fahrbetrieb der Personenbeförderungseinrichtung (1) beeinflussende, Zielgröße beschreibenden Empfehlungsinformation zu erzeugen und an einen Benutzer auszugeben.

10. Beförderungseinrichtung nach einem der vorhergehenden Ansprüche, **dadurch gekennzeichnet, dass** sie
als Personenaufzug, umfassend wenigstens eine in einem durch eine Führungseinrichtung (6) definierten Fahrweg geführt bewegbar gelagerte Kabine (4) zur Aufnahme von Personen,
als Lastenaufzug, umfassend wenigstens eine in einem durch eine Führungseinrichtung definierten Fahrweg geführt bewegbar gelagerte Kabine zur Aufnahme von Gegenständen, als Fahrsteig oder
als Rolltreppe ausgebildet ist.

11. Verfahren zum Betrieb einer Beförderungseinrichtung (1), insbesondere eines Personenaufzugs, nach einem der vorhergehenden Ansprüche, wobei die Beförderungseinrichtung (1) wenigstens eine Funktionskomponente (2a - 2i), welche einen ersten Betriebsmodus, in welchem der Betrieb der Funktionskomponente (2a - 2i) gesperrt ist oder dem Betrieb der Funktionskomponente (2a - 2i) ein wenigstens einen ersten Betriebsparameter umfassender erster Betriebsparametersatz zugrunde gelegt wird, und wenigstens einen weiteren Betriebsmodus, in welchem der Betrieb der Funktionskomponente (2a - 2i) nicht gesperrt ist oder dem Betrieb der Funktionskomponente (2a - 2i) ein wenigstens einen von dem ersten Betriebsparameter unterschiedlichen weiteren Betriebsparameter umfassender weiterer Betriebsparametersatz zugrunde gelegt wird, aufweist, und
eine der wenigstens einen Funktionskomponente (2a - 2i) zuordenbare oder zugeordnete Steuereinrichtung (7), welche zur Aktivierung des ersten oder des wenigstens einen weiteren Betriebsmodus und zur Steuerung des Betriebs der Funktionskomponente (2a - 2i) auf Grundlage des jeweils aktivierten Betriebsmodus eingerichtet ist, umfasst,
**dadurch gekennzeichnet, dass** die Steuereinrichtung (7) den wenigstens einen weiteren Betriebsmodus in Abhängigkeit des Vorliegens einer wenigstens einen eine Aktivierung des wenigstens einen weiteren Betriebsmodus betreffenden benutzerseitigen Bezahlvorgang beschreibenden Bezahlinformation aktiviert und der Steuerung des Betriebs der wenigstens einen Funktionskomponente (2a - 2i) den wenigstens einen weiteren Betriebsparametersatz zugrunde legt, wobei
über die Vornahme eines entsprechenden Bezahlvorgangs, welcher durch eine daraufhin erzeugte und an die Steuereinrichtung (7) übertragene Bezahlinformation beschrieben ist, bedarfsweise der Funktions- und Leistungsumfang einer Funktionskomponente (2a - 2i) erweitert wird.

## Claims

1. Conveying device (1) for conveying people and/or objects along a travel way defined between a travel way starting point and a travel way end point, comprising:
at least one functional component (2a - 2i) which has a first operating mode, in which the operation of the functional component (2a - 2i) is blocked or the operation of the functional component (2a - 2i) is based on a first operating parameter set comprising a first operating parameter, and
at least one further operating mode, in which the operation of the functional component (2a - 2i) is not blocked or the operation of the functional component (2a - 2i) is based on a further operating parameter set comprising at least one further operating parameter which is different from the first operating parameter,
a controller (7) which can be or is associated with the at least one functional component (2a - 2i) and which is designed to activate the first or the at least one further operating mode, and to control the operation of the at least one functional component (2a - 2i) on the basis of the operating mode that is activated in each case,
wherein the controller (7) is furthermore designed to activate the at least one further operating mode depending on the presence of an item of payment information describing a payment process on the user side relating to at least one activation of the at least one further operating mode, and to base the control of the operation of the at least one functional component (2a - 2i) on the at least one further operating parameter set,
**characterised in that**
the scope of function and performance of a functional component (2a - 2i) can be extended, if required, by performing a corresponding payment process,
which is described by an item of payment information which is generated thereupon and is transmitted to the controller (7).

2. Conveying device according to claim 1, **characterised in that** the at least one further operating mode allows operation of the functional component (2a - 2i) having a scope of function and/or performance of the functional component (2a - 2i) which is extended compared with the first operating mode.

3. Conveying device according to either claim 1 or claim 2, **characterised by** a plurality of further operating modes, wherein a first further operating mode allows for operation of the functional component (2a - 2i) having a scope of function and/or performance of the functional component (2a - 2i) which is extended compared with the first operating mode, and a second further operating mode allows for operation of the functional component (2a - 2i) having a scope of function and/or performance of the functional component (2a - 2i) which is extended compared with the further operating mode preceding this.

4. Conveying device according to any of the preceding claims, **characterised in that** the controller (7) is designed to reverse the activation of the at least one further operating mode depending on an item of time information describing at least one time criterion, and/or depending on an item of travel way information describing at least one travel way criterion, and/or depending on an item of climate information describing at least one climate criterion, and/or depending on an item of contamination information describing at least one contamination criterion.

5. Conveying device according to claim 4, **characterised in that** the time criterion is a particular time period, in particular independent of a time of day and/or a date, or a particular time interval, in particular dependent on a time of day and/or a date, between a specifiable or specified starting time point and a specifiable or specified end time point,
the travel way criterion is a particular travel path length, in particular independent of a particular travel way starting point and a particular travel way end point, or a particular travel way, in particular dependent on a particular travel way start point and a particular travel way end point, between a specifiable or specified travel way starting point and a specifiable or specified travel path end point,
the climate criterion is a climate parameter relating to the climate outside and/or inside the person conveying device (1), in particular a humidity, a pressure, a temperature, outside and/or inside the person conveying device (1),
the contamination criterion is a contamination parameter relating to the contamination outside and/or inside the person conveying device (1), in particular the chemical composition of the air, the presence and/or the concentration of particular chemical substances and/or particles, in particular fine particles or pollen, outside and/or inside the person conveying device (1).

6. Conveying device according to either claim 4 or claim 5, **characterised in that** the time criterion and/or the travel way criterion and/or the climate criterion and/or the contamination criterion is variable depending on the payment information describing the payment process, on the user side, relating to the at least one further operating mode.

7. Conveying device (1) according to any of the preceding claims, **characterised in that**
- the functional component (2a) is or comprises a drive unit which forms a part of a drive means (10) on the person conveying device side, or
- the functional component (2b) is or comprises a controller (11) for controlling the movement of a cab (4), on the person conveying device side, along the travel way, in particular for controlling interruptions of the movement, in particular by at least one intermediate stop, of the cab (4) on the person conveying device side, between a travel way starting point which can be or is specified on the user side, and a travel way end point which can be or is specified on the user side, or
- the functional component (2c) is or comprises a closure means (13) which is associated with a possibility of access into a cab (4) on the person conveying device side and which comprises at least one, in particular door-like or door-shaped, closure element (14) which is movable at least between an open and a closed position, or
- the functional component (2d) is or comprises a signal output device (15), in particular as a component of a multimedia device on the person conveying device side, designed for outputting signals into at least one part of a cab (4) on the person conveying device side, or
- the functional component (2e) is or comprises an air conditioning device (16) designed for controlling the climatic conditions in at least one part of a cab (4) on the person conveying device side, or
- the functional component (2f) is or comprises a communication device (17) designed for in particular radio-based communication with a communication partner, or
- the functional component (2g) is or comprises a navigation device (18) designed for outputting travel way information relating to the travel way,
- the functional component (2h) is or comprises a seat device (19) designed for providing a particular number and/or arrangements of seats inside at least one part of a cab (4) on the person conveying device side, or
- the functional component (2i) is or comprises a viewing window clearing device (20) designed for clearing a viewing window which allows a view out of the cab (4) on the person conveying device side.

8. Conveying device according to any of the preceding claims, **characterised in that** the controller (7) is designed to control the operation of the at least one functional component (2a - 2i) on the basis of the at least one further operating mode following activation thereof depending on the presence of an item of clearance information describing at least one clearance, on the user side, of the activated operating mode.

9. Conveying device according to any of the preceding claims, **characterised in that** the or a further controller (7) is designed to generate, and output to a user, an item of recommendation information describing a recommendation to activate a further operating mode in view of a particular target variable, which in particular influences the travel operation of the person conveying device (1).

10. Conveying device according to any of the preceding claims, **characterised in that** it is designed
as a passenger lift, comprising at least one cab (4) for receiving people, which is mounted so as to be movable in a guided manner in a travel way defined by a guide means (6),
as a cargo lift, comprising at least one cab for receiving objects, which is mounted so as to be movable in a guided manner in a travel way defined by a guide means,
as a moving walkway, or
as an escalator.

11. Method for operating a conveying device (1), in particular a passenger lift, according to any of the preceding claims, wherein the conveying device (1) comprises at least one functional component (2a - 2i) which has a first operating mode, in which the operation of the functional component (2a - 2i) is blocked or the operation of the functional component (2a - 2i) is based on a first operating parameter set which comprises at least one first operating parameter, and at least one further operating mode, in which the operation of the functional component (2a - 2i) is not blocked or the operation of the functional component (2a - 2i) is based on a further operating parameter set which comprises at least one further operating parameter which is different from the first operating parameter, and
a controller (7) which can be or is associated with the at least one functional component (2a - 2i) and which is designed for activating the first or the at least one further operating mode and for controlling the operation of the functional component (2a - 2i) on the basis of the operating mode activated in each case, **characterised in that** the controller (7) activates the at least one further operating mode depending on the presence of an item of payment information describing at least one payment process on the user side relating to at least one activation of the at least one further operating mode, and bases the control of the operation of the at least one functional component (2a - 2i) on the at least one further operating parameter set, wherein
the scope of function and performance of a functional component (2a - 2i) is extended, if required, by performing a corresponding payment process, which is described by an item of payment information which is generated thereupon and is transmitted to the controller (7).

## Revendications

1. Dispositif de transport (1) pour transporter des personnes et/ou des objets le long d'un trajet défini entre un point de départ de trajet et un point d'arrivée de trajet, comprenant :
au moins un composante fonctionnelle (2a - 2i), laquelle présente un premier mode de fonctionnement, dans lequel le fonctionnement de la composante fonctionnelle (2a - 2i) est bloqué ou le fonctionnement de la composante fonctionnelle (2a - 2i) est fondé sur un premier jeu de paramètres de fonctionnement comprenant au moins un premier paramètre de fonctionnement, et
au moins un autre mode de fonctionnement, dans lequel le fonctionnement de la composante fonctionnelle (2a - 2i) n'est pas bloqué ou le fonctionnement de la composante fonctionnelle (2a - 2i) est fondé sur un autre jeu de paramètres de fonctionnement comprenant au moins un autre paramètre de fonctionnement différent du premier paramètre de fonctionnement,
un dispositif de commande (7) pouvant être associé ou associé à l'au moins une composante fonctionnelle (2a - 2i), lequel est mis au point pour activer le premier ou l'au moins un autre mode de fonctionnement et pour commander le fonctionnement de l'au moins une composante fonctionnelle (2a - 2i) sur la base du mode de fonctionnement respectivement activé,
dans lequel le dispositif de commande (7) est mis au point en outre pour activer l'au moins un autre mode de fonctionnement en fonction de la présence d'une information de paiement décrivant au moins un processus de paiement côté utilisateur concernant une activation de l'au moins un autre mode de fonctionnement et pour fonder la commande du fonctionnement de l'au moins une composante fonctionnelle (2a - 2i) sur l'au moins un autre jeu de paramètres de fonctionnement,
**caractérisé en ce que**
au besoin le champ des fonctions et des prestations d'une composante fonctionnelle (2a - 2i) peut être étendu par l'intermédiaire de la réalisation d'un processus de paiement correspondant, lequel est décrit par une information de paiement en résultant et transmise au dispositif de commande (7).

2. Dispositif de fonctionnement selon la revendication 1, **caractérisé en ce que** l'au moins un autre mode de fonctionnement autorise un fonctionnement de la composante fonctionnelle (2a - 2i) avec un champ de fonctions et/ou de services de la composante fonctionnelle (2a - 2i) étendu en comparaison avec le premier mode de fonctionnement.

3. Dispositif de fonctionnement selon la revendication 1 ou 2, **caractérisé par** plusieurs autres modes de fonctionnement, dans lequel un autre premier mode de fonctionnement autorise un fonctionnement de la composante fonctionnelle (2a - 2i) avec un champ de fonctions et/ou de services de la composante fonctionnelle (2a - 2i) étendu en comparaison avec le premier mode de fonctionnement et un autre deuxième mode de fonctionnement autorise un fonctionnement de la composante fonctionnelle (2a - 2i) avec un champ de fonctions et/ou de services de la composante fonctionnelle (2a - 2i) étendu en comparaison avec l'autre mode de fonctionnement le précédant.

4. Dispositif de transport selon l'une quelconque des revendications précédentes, **caractérisé en ce que** le dispositif de commande (7) est mis au point pour annuler l'activation de l'au moins un autre mode de fonctionnement en fonction d'une information de temps décrivant au moins un critère de temps et/ou en fonction d'une information de trajet décrivant au moins un critère de trajet et/ou en fonction d'une information de climatisation décrivant au moins un critère de climatisation et/ou en fonction d'une information d'encrassement décrivant au moins un critère d'encrassement.

5. Dispositif de transport selon la revendication 4, **caractérisé en ce que** le critère de temps est une durée définie, en particulier indépendante d'une heure et/ou d'une date ou une période de temps définie, dépendant en particulier d'une heure et/ou d'une date entre un moment de départ pouvant être spécifié ou spécifié et un moment d'arrivée pouvant être spécifié ou spécifié,
le critère de trajet est une longueur de trajet définie indépendante en particulier d'un point de départ de trajet défini et d'un point d'arrivée de trajet donné ou est un trajet défini dépendant en particulier d'un point de départ de trajet défini et d'un point d'arrivée de trajet défini entre un point de départ de trajet pouvant être spécifié ou spécifié et un point d'arrivée de trajet pouvant être spécifié ou spécifié,
le critère de climatisation est un paramètre de climatisation concernant la climatisation à l'extérieur et/ou à l'intérieur du dispositif de transport de personnes (1), en particulier une humidité, une pression, une température, à l'extérieur et/ou à l'intérieur du dispositif de transport de personnes (1),
le critère d'encrassement est un paramètre d'encrassement concernant l'encrassement à l'extérieur et/ou à l'intérieur du dispositif de transport de personnes (1), en particulier la composition chimique de l'air, la présence et/ou la concentration de substances et/ou de particules chimiques définies, en particulier de poussières fines ou de pollen, à l'extérieur et/ou à l'intérieur du dispositif de transport de personnes (1).

6. Dispositif de transport selon la revendication 4 ou 5, **caractérisé en ce que** le critère de temps et/ou le critère de trajet et/ou le critère de climatisation et/ou le critère d'encrassement sont variables en fonction de l'information de paiement décrivant le processus de paiement côté utilisateur concernant au moins un autre mode de fonctionnement.

7. Dispositif de transport selon l'une quelconque des revendications précédentes, **caractérisé en ce que**
- la composante fonctionnelle (2a) est un groupe d'entraînement formant une partie d'un dispositif d'entraînement (10) côté dispositif de transport de personnes ou en comprend un de ce type, ou
- la composante fonctionnelle (2b) est un dispositif de commande (11) pour commander le déplacement d'une cabine (4) côté dispositif de transport de personnes le long du trajet, en particulier pour commander des interruptions du déplacement, en particulier par au moins un arrêt intermédiaire, de la cabine (4) côté dispositif de transport de personnes entre un point de départ de trajet pouvant être spécifié ou spécifié côté utilisateur et un point de départ de trajet pouvant être spécifié ou spécifié côté utilisateur ou en comprend un de ce type,
ou
- la composante fonctionnelle (2c) est un dispositif de fermeture (13) associé à une possibilité d'accès dans une cabine (4) côté dispositif de transport de personnes, lequel comprend au moins un élément de fermeture (14), en particulier de type porte ou en forme de porte, pouvant être déplacé entre une position ouverte et une position fermée ou en comprend un de ce type, ou
- la composante fonctionnelle (2d) est un dispositif d'envoi de signaux (15) mis au point pour envoyer des signaux dans au moins une partie d'une cabine (4) côté dispositif de transport de personnes, en particulier en tant qu'élément constitutif d'un dispositif multimédia côté dispositif de transport de personnes ou en comprend un de ce type, ou
- la composante fonctionnelle (2e) est un dispositif de climatisation (16) mis au point pour commande les conditions de climatisation dans au moins une partie d'une cabine (4) côté dispositif de transport de personnes ou en comprend un de ce type, ou
- la composante fonctionnelle (2f) est un dispositif de communication (17) mis au point pour communiquer, en particulier par radio, avec un partenaire de communication ou en comprend un de ce type, ou
- la composante fonctionnelle (2g) est un dispositif de navigation (18) mis au point pour envoyer des informations de trajet concernant le trajet ou en comprend un de ce type,
- la composante fonctionnelle (2h) est un dispositif de places (19) mis au point pour fournir un nombre et/ou un agencement définis de places assises à l'intérieur d'au moins une partie d'une cabine (4) côté dispositif de transport de personnes ou en comprend un de ce type, ou
- la composante fonctionnelle (2i) est un dispositif de déblocage de fenêtre d'inspection (20) mis pour au point pour débloquer une fenêtre d'inspection permettant une vue sur la cabine (4) côté dispositif de transport de personnes ou en comprend un de ce type.

8. Dispositif de transport selon l'une quelconque des revendications précédentes, **caractérisé en ce que** le dispositif de commande (7) est mis au point pour commander le fonctionnement de l'au moins une composante fonctionnelle (2a - 2i) sur la base de l'au moins un autre mode de fonctionnement après son activation en fonction de la présence d'une information de déblocage décrivant au moins un déblocage côté utilisateur du mode de fonctionnement activé.

9. Dispositif de transport selon l'une quelconque des revendications précédentes, **caractérisé en ce que** le ou un autre dispositif de commande (7) est mis au point pour générer une information de recommandation décrivant une recommandation d'une activation d'un autre mode de fonctionnement en ce qui concerne une grandeur cible définie ayant une incidence en particulier sur le mode de conduite du dispositif de transport de personnes (1) et pour l'envoyer à un utilisateur.

10. Dispositif de transport selon l'une quelconque des revendications précédentes, **caractérisé en ce qu'**il est réalisé
en tant qu'un ascenseur pour personnes comprenant au moins une cabine (4) montée de manière à se déplacer de manière guidée sur un trajet défini par un dispositif de guidage (6), destinée à recevoir des personnes,
qu'un ascenseur pour charges, comprenant au moins une cabine, montée de manière à pouvoir se déplacer de manière guidée sur un trajet défini par un dispositif de guidage, destinée à recevoir des objets,
en tant que trottoir roulant ou
en tant que escalier roulant.

11. Procédé pour faire fonctionner un dispositif de transport (1), en particulier un ascenseur pour personnes, selon l'une quelconque des revendications précédentes, dans lequel le dispositif de transport (1) comprend au moins une composante fonctionnelle (2a - 2i), laquelle présente un premier mode de fonctionnement, dans lequel le fonctionnement de la composante fonctionnelle (2a - 2i) est bloqué et le fonctionnement de la composante fonctionnement (2a - 2i) est fondé sur un premier jeu de paramètres de fonctionnement comprenant au moins un premier paramètre de fonctionnement, et au moins un autre mode de fonctionnement, dans lequel le fonctionnement de la composante fonctionnelle (2a - 2i) n'est pas bloqué ou le fonctionnement de la composante fonctionnelle (2a - 2i) est fondé sur un autre jeu de paramètres de fonctionnement comprenant au moins un autre paramètre de fonctionnement différent du premier paramètre de fonctionnement, et
un dispositif de commande (7) pouvant être associé ou associé à l'au moins une composante fonctionnelle (2a - 2i), lequel est mis au pont pour activer le premier ou l'au moins un autre mode de fonctionnement et pour commander le fonctionnement de la composante fonctionnelle (2a - 2i) sur la base du mode de fonctionnement respectivement activé,
**caractérisé en ce que** le dispositif de commande (7) active l'au moins un autre mode de fonctionnement en fonction de la présence d'une information de paiement décrivant au moins un processus de paiement côté utilisateur concernant une activation de l'au moins un autre de fonctionnement et la commande du fonctionnement de l'au moins une composante fonctionnelle (2a - 2i) est fondée sur l'au moins un autre jeu de paramètres de fonctionnement, dans lequel
au besoin le champ des fonctions et des services d'une composante fonctionnelle (2a - 2i) est étendu par l'intermédiaire de la réalisation d'un processus de paiement correspondant, lequel est décrit par une information de paiement en résultant et transmise au dispositif de commande (7).
